(19) Europäisches Patentamt
European Patent Office
Office européen des brevets

(11) EP 4 563 606 A1

(12) **EUROPEAN PATENT APPLICATION**
published in accordance with Art. 153(4) EPC

(43) Date of publication:
**04.06.2025 Bulletin 2025/23**

(21) Application number: **23846644.5**

(22) Date of filing: **27.07.2023**

(51) International Patent Classification (IPC):
***C08F 214/26*** (2006.01) ***C08F 6/14*** (2006.01)
***C09D 5/03*** (2006.01) ***C09D 127/18*** (2006.01)

(52) Cooperative Patent Classification (CPC):
**C08F 6/14; C08F 214/26; C09D 5/03; C09D 127/18**

(86) International application number:
**PCT/JP2023/027655**

(87) International publication number:
**WO 2024/024914 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.07.2022 JP 2022119935**
**15.11.2022 JP 2022182846**

(71) Applicant: **DAIKIN INDUSTRIES, LTD.**
**Osaka-shi, Osaka 530-0001 (JP)**

(72) Inventors:
- **YOSHIDA, Hirotoshi**
**Osaka-Shi, Osaka 530-0001 (JP)**
- **YAMABE, Takuya**
**Osaka-Shi, Osaka 530-0001 (JP)**
- **YAMAZAKI, Ranna**
**Osaka-Shi, Osaka 530-0001 (JP)**
- **YAMAMOTO, Emi**
**Osaka-Shi, Osaka 530-0001 (JP)**
- **KATO, Taketo**
**Osaka-Shi, Osaka 530-0001 (JP)**
- **KAWAHARA, Kazuya**
**Osaka-Shi, Osaka 530-0001 (JP)**
- **NAKATANI, Yasukazu**
**Osaka-Shi, Osaka 530-0001 (JP)**
- **YAMANAKA, Taku**
**Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

# (54) POWDER CONTAINING FLUOROPOLYMER PARTICLES AND MANUFACTURING METHOD THEREFOR, POWDER COATING, AND LIQUID COATING COMPOSITION

(57) Provided is a powder containing particles of a fluoropolymer, wherein the powder contains a fluorine-containing compound having a hydrophilic group and a content of the fluorine-containing compound having a hydrophilic group is 250 ppb by mass or less based on the powder, the particles of the fluoropolymer have an average secondary particle size of 0.5 to 10 μm, and the fluoropolymer is at least one selected from the group consisting of a tetrafluoroethylene/perfluoro(alkyl vinyl ether) copolymer, a tetrafluoroethylene/hexafluoropropylene copolymer, and a tetrafluoroethylene/perfluoro(alkyl vinyl ether)/hexafluoropropylene copolymer.

EP 4 563 606 A1

## Description

TECHNICAL FIELD

The present disclosure relates to a powder containing particles of a fluoropolymer, a method for producing the same, a powder coating material, and a liquid coating material composition.

BACKGROUND ART

Patent Document 1 discloses a TFE thermoprocessable perfluoropolymer comprising perfluoroalkylvinylethers in the following amounts, expressed as percent by weight of the total monomers:

a) 0.2 to 5.5% of perfluoromethylvinylether (PMVE);
b) 0.4 to 4.5% of perfluoroethylvinylether (PEVE) and/or perfluoropropylvinylether (PFVE); and
c) 0.5 to 6% of hexafluoropropene (HFP);

wherein the total amount of perfluoroalkylvinylethers a)+b) ranges from 1.5 to 5.5% by weight of total monomers; and the TFE amount is complemented to 100% by weight.

Patent Document 2 discloses a mixture of thermoplastic fluoropolymers essentially comprising units of tetrafluoroethylene and from 0.5 to 10 mol% of units of one or more perfluoro alkyl vinyl ethers having from 1 to 4 carbon atoms in the perfluoroalkyl radical, the mixture comprising:

- at least 10% by weight and not more than 90% by weight of at least one component A) with an $MFI_A \geq 30$ and
- not more than 90% by weight and at least 10% by weight of at least one component B) with an $MFI_B \leq 15$,

the components being selected in such a way that the ratio of the $MFI_A$ of component A) to the $MFI_B$ of component B) is in the range from 80 to 2,500.

Patent Document 3 discloses a method for producing a melt-processable fluororesin, comprising emulsion-polymerizing a fluorine-containing monomer, or a fluorine-containing monomer and an olefin, in an aqueous medium containing a fluorine-containing emulsifier represented by formula (1): $CF_3CF_2OCF_2CF_2OCF_2COONH_4$, wherein the melt-processable fluororesin is a melt-processable fluororesin selected from a tetrafluoroethylene/hexafluoropropylene copolymer having a molar ratio of tetrafluoroethylene/hexafluoropropylene of 95/5 to 90/10, a tetrafluoroethylene/perfluoro(propyl vinyl ether) copolymer having a molar ratio of tetrafluoroethylene/perfluoro(propyl vinyl ether) of 99.7/0.3 to 97/3, a tetrafluoroethylene/ethylene copolymer having a molar ratio of tetrafluoroethylene/ethylene of 65/35 to 50/50, a chlorotrifluoroethylene/ethylene copolymer having a molar ratio of chlorotrifluoroethylene/ethylene of 65/35 to 50/50, a tetrafluoroethylene/hexafluoropropylene/vinylidene fluoride copolymer having a molar ratio of

tetrafluoroethylene/hexafluoropropylene/vinylidene fluoride of 35 to 75/5 to 15/20 to 50, a tetrafluoroethylene/hexafluoropropylene/ethylene copolymer having a molar ratio of tetrafluoroethylene/hexafluoropropylene/ethylene of 35 to 65/5 to 15/30 to 50, a tetrafluoroethylene/hexafluoropropylene/perfluoro(alkyl vinyl ether) copolymer having a molar ratio of tetrafluoroethylene/hexafluoropropylene/perfluoro(alkyl vinyl ether) of 88 to 94.8/5 to 10/0.2 to 2, and polyvinylidene fluoride.

RELATED ART

PATENT DOCUMENTS

Patent Document 1: International Publication No. WO 2007/96347
Patent Document 2: National Publication of International Patent Application No. 2002-503744
Patent Document 3: Japanese Patent Laid-Open No. 2013-100532

SUMMARY OF THE INVENTION

## PROBLEM TO BE SOLVED BY THE INVENTION

An object of the present disclosure is to provide a powder containing particles of a fluoropolymer and having a reduced content of a fluorine-containing compound having a hydrophilic group.
Another object of the present disclosure is to provide a method for producing a powder containing particles of a fluoropolymer and having a reduced content of a fluorine-containing compound having a hydrophilic group.

## MEANS FOR SOLVING THE PROBLEM

According to the present disclosure, provided is a powder containing particles of a fluoropolymer, wherein the powder contains a fluorine-containing compound having a hydrophilic group and the content of the fluorine-containing compound having a hydrophilic group is 250 ppb by mass or less based on the powder, the particles of the fluoropolymer have an average secondary particle size of 0.5 to 10 μm, and the fluoropolymer is at least one selected from the group consisting of a tetrafluoroethylene/perfluoro(alkyl vinyl ether) copolymer, a tetrafluoroethylene/hexafluoropropylene copolymer, and a tetrafluoroethylene/perfluoro(alkyl vinyl ether)/hexafluoropropylene copolymer.

## EFFECTS OF INVENTION

The present disclosure can provide a powder containing particles of a fluoropolymer and having a reduced content of a fluorine-containing compound having a hydrophilic group.
Also, the present disclosure can provide a method for producing a powder containing particles of a fluoropolymer and having a reduced content of a fluorine-containing compound having a hydrophilic group.

## DESCRIPTION OF EMBODIMENTS

Before describing the present disclosure in detail, some terms used in the present disclosure will now be defined or described.
In the present disclosure, the fluororesin is a partially crystalline fluoropolymer which is a fluoroplastic. The fluororesin has a melting point and has thermoplasticity, and may be either melt-fabricable or non melt-processible.
The term "melt-fabricable" as used herein means that a polymer has an ability to be processed in a molten state using a conventional processing device such as an extruder or an injection molding machine. Thus, a melt-fabricable fluororesin usually has a melt flow rate of 0.01 to 500 g/10 min as measured by the measurement method described below.
The fluororesin (excluding polytetrafluoroethylene) as used herein is preferably a fluoropolymer having tetrafluoroethylene unit content of less than 99 mol% based on all polymerization units.
The content of each of the monomers constituting the fluoropolymer can be calculated herein by any appropriate combination of NMR, FT-IR, elemental analysis, X-ray fluorescence analysis in accordance with the type of monomer.
The "organic group" as used herein means a group containing one or more carbon atoms or a group formed by removing one hydrogen atom from an organic compound.
Examples of the "organic group" include:

an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
a alkenyl group optionally having one or more substituents,
a aralkyl group optionally having one or more substituents,
a non-aromatic heterocyclic group optionally having one or more substituents,
a heteroaryl group optionally having one or more substituents, a cyano group,
a formyl group,

RaO-,

RaCO-,

$RaSO_2$-,

RaCOO-,

RaNRaCO-,

RaCONRa-,

RaOCO-,

$RaOSO_2$-,

and

$RaNRbSO_2$-

wherein each Ra is independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
a aryl group optionally having one or more substituents,
an aralkyl group optionally having one or more substituents,
a non-aromatic heterocyclic group optionally having one or more substituents, or
a heteroaryl group optionally having one or more substituents, and
Rb is independently H or an alkyl group optionally having one or more substituents.

The organic group is preferably an alkyl group optionally having one or more substituents.

The term "substituent" as used herein means a group capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxy amino group, a carbamoylamino group, a sulfamoylamino group, a halogen atom, a sulfamoylcarbamoyl group, a carbamoyl sulfamoyl group, a dialiphatic oxyphosphinyl group, and a diaromatic oxyphosphinyl group.

The aliphatic group may be saturated or unsaturated, and may have a hydroxyl group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic group include alkyl groups having 1 to 8 and preferably 1 to 4 carbon atoms in total, such as a methyl group, an ethyl group, a vinyl group, a cyclohexyl group, and a carbamoylmethyl group.

The aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic group include aryl groups having 6 to 12 carbon atoms and preferably 6 to 10 carbon atoms in total, such as a phenyl group, a 4-nitrophenyl group, a 4-acetylaminophenyl group, and a 4-methanesulfonylphenyl group.

The heterocyclic group may have a halogen atom, a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the heterocyclic group include 5- or 6-membered heterocyclic groups having 2 to 12 and preferably 2 to 10 carbon atoms in total, such as a 2-tetrahydrofuryl group and a 2-pyrimidyl group.

The acyl group may have an aliphatic carbonyl group, an arylcarbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the acyl group include acyl groups having 2 to 8 and preferably 2 to 4 carbon atoms in total, such as an

acetyl group, a propanoyl group, a benzoyl group, and a 3-pyridinecarbonyl group.

The acylamino group may have an aliphatic group, an aromatic group, a heterocyclic group, or the like, and may have, for example, an acetylamino group, a benzoylamino group, a 2-pyridinecarbonylamino group, a propanoylamino group, or the like. Examples of the acylamino group include acylamino groups having 2 to 12 and preferably 2 to 8 carbon atoms in total and alkylcarbonylamino groups having 2 to 8 carbon atoms in total, such as an acetylamino group, a benzoylamino group, a 2-pyridinecarbonylamino group, and a propanoylamino group.

The aliphatic oxycarbonyl group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic oxycarbonyl group include alkoxycarbonyl groups having 2 to 8 and preferably 2 to 4 carbon atoms in total, such as a methoxycarbonyl group, an ethoxycarbonyl group, and a (t)-butoxycarbonyl group.

The carbamoyl group may have an aliphatic group, an aromatic group, a heterocyclic group, or the like. Examples of the carbamoyl group include an unsubstituted carbamoyl group and alkylcarbamoyl groups having 2 to 9 carbon atoms in total, and preferably an unsubstituted carbamoyl group and alkylcarbamoyl groups having 2 to 5 carbon atoms in total, such as a N-methylcarbamoyl group, a N,N-dimethylcarbamoyl group, and a N-phenylcarbamoyl group.

The aliphatic sulfonyl group may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic sulfonyl group include alkylsulfonyl groups having 1 to 6 carbon atoms in total and preferably 1 to 4 carbon atoms in total, such as a methanesulfonyl group.

The aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic sulfonyl group include arylsulfonyl groups having 6 to 10 carbon atoms in total, such as a benzenesulfonyl group.

The amino group may have an aliphatic group, an aromatic group, a heterocyclic group, or the like.

The acylamino group may have, for example, an acetylamino group, a benzoylamino group, a 2-pyridinecarbonylamino group, a propanoylamino group, or the like. Examples of the acylamino group include acylamino groups having 2 to 12 carbon atoms in total and preferably 2 to 8 carbon atoms in total, and more preferably alkylcarbonylamino groups having 2 to 8 carbon atoms in total, such as an acetylamino group, a benzoylamino group, a 2-pyridinecarbonylamino group, and a propanoylamino group.

The aliphatic sulfonamide group, the aromatic sulfonamide group, and the heterocyclic sulfonamide group may be, for example, a methanesulfonamide group, a benzenesulfonamide group, and a 2-pyridinesulfonamide group, respectively.

The sulfamoyl group may have an aliphatic group, an aromatic group, a heterocyclic group, or the like. Examples of the sulfamoyl group include a sulfamoyl group, alkylsulfamoyl groups having 1 to 9 carbon atoms in total, dialkylsulfamoyl groups having 2 to 10 carbon atoms in total, arylsulfamoyl groups having 7 to 13 carbon atoms in total, and heterocyclic sulfamoyl groups having 2 to 12 carbon atoms in total, more preferably a sulfamoyl group, alkylsulfamoyl groups having 1 to 7 carbon atoms in total, dialkylsulfamoyl groups having 3 to 6 carbon atoms in total, arylsulfamoyl groups having 6 to 11 carbon atoms in total, and heterocyclic sulfamoyl groups having 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The aliphatic oxy group may be saturated or unsaturated, and may have a methoxy group, an ethoxy group, an i-propyloxy group, a cyclohexyloxy group, a methoxyethoxy group, or the like. Examples of the aliphatic oxy group include alkoxy groups having 1 to 8 and preferably 1 to 6 carbon atoms in total, such as a methoxy group, an ethoxy group, an i-propyloxy group, a cyclohexyloxy group, and a methoxyethoxy group.

The aromatic amino group and the heterocyclic amino group may have an aliphatic group, an aliphatic oxy group, a halogen atom, a carbamoyl group, a heterocyclic group having a ring-fused with the aryl group, or an aliphatic oxycarbonyl group, and preferably an aliphatic group having 1 to 4 carbon atoms in total, an aliphatic oxy group having 1 to 4 carbon atoms in total, a halogen atom, a carbamoyl group having 1 to 4 carbon atoms in total, a nitro group, or an aliphatic oxycarbonyl group having 2 to 4 carbon atoms in total.

The aliphatic thio group may be saturated or unsaturated, and examples include alkylthio groups having 1 to 8 carbon atoms in total and more preferably 1 to 6 carbon atoms in total, such as a methylthio group, an ethylthio group, a carbamoylmethylthio group, and a t-butylthio group.

The carbamoylamino group may have an aliphatic group, an aryl group, a heterocyclic group, or the like. Examples of the carbamoylamino group include a carbamoylamino group, alkylcarbamoylamino groups having 2 to 9 carbon atoms in total, dialkylcarbamoylamino groups having 3 to 10 carbon atoms in total, arylcarbamoylamino groups having 7 to 13 carbon atoms in total, and heterocyclic carbamoylamino groups having 3 to 12 carbon atoms in total, and preferably a carbamoylamino group, alkylcarbamoylamino groups having 2 to 7 carbon atoms in total, dialkylcarbamoylamino groups having 3 to 6 carbon atoms in total, arylcarbamoylamino groups having 7 to 11 carbon atoms in total, and heterocyclic carbamoylamino groups having 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

A range indicated by endpoints as used herein includes all numerical values within the range (for example, the range of 1 to 10 includes 1.4, 1.9, 2.33, 5.75, 9.98, and the like).

The phrase "at least one" as used herein includes all numerical values equal to or greater than 1 (for example, at least 2, at least 4, at least 6, at least 8, at least 10, at least 25, at least 50, at least 100, and the like).

Hereinafter, specific embodiments of the present disclosure will now be described in detail, but the present disclosure is not limited to the following embodiments.

The present disclosure relates to a powder containing particles of a fluoropolymer. The powder of the present disclosure is a powder containing particles of a fluoropolymer, wherein the powder contains a fluorine-containing compound having a hydrophilic group and the content of the fluorine-containing compound having a hydrophilic group is 250 ppb by mass or less based on the powder, and the fluoropolymer is at least one selected from the group consisting of a tetrafluoroethylene/perfluoro(alkyl vinyl ether) copolymer, a tetrafluoroethylene/hexafluoropropylene copolymer, and a tetrafluoroethylene/perfluoro(alkyl vinyl ether)/hexafluoropropylene copolymer.

As described in, for example, Patent Document 3, the fluoropolymer is produced by emulsion-polymerizing a fluorine-containing monomer, or a fluorine-containing monomer and an olefin, in an aqueous medium containing a fluorine-containing emulsifier. Also, in Example 1 of Patent Document 3, an aqueous emulsion obtained by emulsion polymerization is frozen to precipitate a copolymer, the copolymer is dried at 150°C for 12 hours and, thus, a tetrafluoroethylene/perfluoro(propyl vinyl ether) copolymer is obtained as well. A powder of the copolymer thus obtained contains a fluorine-containing emulsifier used during polymerization.

Such a fluorine-containing compound having a hydrophilic group, such as a fluorine-containing emulsifier, is a compound unnecessary when the copolymer is used in a variety of applications and, accordingly, is preferably removed from the copolymer.

While the powder of the present disclosure contains a fluorine-containing compound having a hydrophilic group, the content thereof is reduced to 250 ppb by mass or less based on the powder. Accordingly, for example, when a formed article or a coating film is obtained using the powder of the present disclosure, the resulting formed article or coating film sufficiently exhibits the excellent properties of the fluoropolymer constituting the formed article, i.e., a tetrafluoroethylene/perfluoro(alkyl vinyl ether) copolymer, a tetrafluoroethylene/hexafluoropropylene copolymer, or a tetrafluoroethylene/perfluoro(alkyl vinyl ether)/hexafluoropropylene copolymer.

In one embodiment, provided is a powder containing particles of a fluoropolymer, wherein the powder contains a fluorine-containing compound having a hydrophilic group and the content of the fluorine-containing compound having a hydrophilic group is 250 ppb by mass or less based on the powder, the particles of the fluoropolymer have an average secondary particle size of 0.5 to 10 μm, and the fluoropolymer is at least one selected from the group consisting of a tetrafluoroethylene/perfluoro(alkyl vinyl ether) copolymer, a tetrafluoroethylene/hexafluoropropylene copolymer, and a tetrafluoroethylene/perfluoro(alkyl vinyl ether)/hexafluoropropylene copolymer (this powder may be referred to as the "first powder" herein).

The first powder, in addition to having a reduced content of a fluorine-containing compound having a hydrophilic group, has an average secondary particle size of 0.5 to 10 μm and, accordingly, the powder has excellent handleability and is readily formed. In addition, powder coating that involves the powder of the present disclosure also facilitates the formation of a coating film.

In one embodiment, provided is a powder containing particles of a fluoropolymer, wherein the powder contains a fluorine-containing compound having a hydrophilic group and the content of the fluorine-containing compound having a hydrophilic group is 250 ppb by mass or less based on the powder, the fluoropolymer is at least one selected from the group consisting of a tetrafluoroethylene/perfluoro(alkyl vinyl ether) copolymer, a tetrafluoroethylene/hexafluoropropylene copolymer, and a tetrafluoroethylene/perfluoro(alkyl vinyl ether)/hexafluoropropylene copolymer, and the powder is obtained by densifying a base powder containing the fluoropolymer with a roll under conditions that provide a specific gravity not less than 90% of the true specific gravity, pulverizing the densified powder, then removing fine particles in a 3 to 40% by mass range of the overall particle size distribution of the pulverized powder by pneumatic classification, and further removing coarse particles in a 1 to 20% by mass range of the overall particle size distribution of the pulverized powder by classification (this powder may be referred to as the "second powder" herein).

The second powder is obtained by densifying a base powder containing the fluoropolymer with a roll under conditions that provide a specific gravity not less than 90% of the true specific gravity, pulverizing the densified powder, then removing fine particles in a 3 to 40% by mass range of the overall particle size distribution of the pulverized powder by pneumatic classification, and further removing coarse particles in a 1 to 20% by mass range of the overall particle size distribution of the pulverized powder by classification and, accordingly, the second powder, in addition to having a reduced content of a fluorine-containing compound having hydrophilic groups, has a uniform particle morphology, a narrow particle

size distribution, and excellent fluidity. Powder coating that involves the second powder also facilitates the formation of a thin coating film having a uniform surface.

Next, the powder and the method for producing the powder of the present disclosure will now be described in detail.

1. Powder

(First powder)

The first powder of the present disclosure is a powder containing fluoropolymer particles, and the average secondary particle size of the fluoropolymer particles is 0.5 to 10 μm. The powder as used herein is an agglomerate of fluoropolymer particles. When the fluoropolymer particles are produced by emulsion polymerization, the fluoropolymer particles are secondary particles formed by aggregation of primary particles obtained by the polymerization. Emulsion polymerization of a fluoromonomer usually provides an aqueous dispersion in which primary particles of a fluoropolymer are dispersed in an aqueous medium. The fluoropolymer particles are formed by causing the primary particles to aggregate in the aqueous dispersion. The formed aggregate is recovered and dried to give a powder (an agglomerate) of the fluoropolymer particles.

The fluoropolymer particles constituting the first powder of the present disclosure have an average secondary particle size of 0.5 to 10 μm. This average secondary particle size is different from the average particle size of primary particles dispersed in the aqueous dispersion (the average primary particle size), and is the average particle size of secondary particles formed by the aggregation of primary particles.

The average secondary particle size of the fluoropolymer particles contained in the first powder is 0.5 to 10 μm, is preferably 1 μm or more, and is preferably 5 μm or less and more preferably 3 μm or less. Due to the average secondary particle size of the fluoropolymer particles being within the above range, a coating film having a uniform thickness can be easily obtained without impairing handleability.

The average secondary particle size of the fluoropolymer particles contained in the first powder can be regulated by, for example, polymerizing a fluoromonomer in the presence of a fluorine-containing surfactant, a polymerization initiator, and an aqueous medium to produce primary particles of a fluoropolymer, then coagulating the primary particles of the fluoropolymer obtained by the polymerization, and drying the coagulate at a suitable temperature. The powder thus obtained is not formed by the fusion of the fluoropolymer particles (the secondary particles), but are formed by simple aggregation of the fluoropolymer particles. Accordingly, the average secondary particle size of the fluoropolymer particles in the powder can be regulated to the above range.

The average secondary particle size of the fluoropolymer particles is the volume-based average particle size (50% cumulative particle size) d50, and can be determined by laser diffractometry.

The average primary particle size of the fluoropolymer particles contained in the first powder is preferably less than 0.5 μm and is preferably 0.01 μm or more. The average particle size of the average primary particle size of the fluoropolymer particles can be measured by dynamic light scattering. First, a fluoropolymer aqueous dispersion having a polymer solid concentration that is regulated to about 1.0% by mass is prepared, and the average primary particle size is measured 70 times cumulatively by dynamic light scattering at a measurement temperature of 25°C wherein the solvent (water) has a refractive index of 1.3328 and a viscosity of 0.8878 mPa·s. In the dynamic light scattering, ELSZ-1000S (manufactured by Otsuka Electronics Co., Ltd.) may be used, for example.

The specific surface area of the first powder is preferably 8 $m^2$/g or more and more preferably 10 $m^2$/g or more, and is preferably 100 $m^2$/g or less and more preferably 50 $m^2$/g or less. Due to the specific surface area of the powder being within the above range, a smooth coating film having an excellent appearance can be more easily obtained.

The specific surface area of the powder containing the fluoropolymer particles included in the first powder can be regulated by, for example, polymerizing a fluoromonomer in the presence of a fluorine-containing surfactant, a polymerization initiator, and an aqueous medium to produce primary particles of a fluoropolymer, then coagulating the primary particles of the fluoropolymer obtained by the polymerization, and drying the coagulate at a suitable temperature. The primary particles thus obtained have a relatively small specific surface area. Moreover, the fluoropolymer particles (the secondary particles) constituting the powder thus obtained is not formed by the fusion of the primary particles of the fluoropolymer, but are formed by simple aggregation of the primary particles of the fluoropolymer. Accordingly, the specific surface area of the powder can reflect the specific surface area of the primary particles of the fluoropolymer, and a relatively large specific surface area can be obtained.

The specific surface area of the powder is a value measured by BET method using a surface analyzer.

(Second powder)

The second powder of the present disclosure is a powder containing particles of a fluoropolymer and is obtained

by a production method comprising densifying a base powder containing the fluoropolymer with a roll under conditions that provide a specific gravity not less than 90% of a true specific gravity, pulverizing the densified powder, then removing fine particles in a 3 to 40% by mass range of an overall particle size distribution of pulverized powder by pneumatic classification, and further removing coarse particles in a 1 to 20% by mass range of the overall particle size distribution of the pulverized powder by classification.

The second powder is obtained by the above production method. Accordingly, the second powder has a large apparent density, and the fluoropolymer particles constituting the powder have a uniform shape. In addition, the second powder has a uniform particle morphology and a narrow particle size distribution. Accordingly, the second powder has excellent fluidity.

The average secondary particle size of the fluoropolymer particles constituting the second powder is preferably 5 to 100 μm, is more preferably 15 μm or more and even more preferably 30 μm or more, and is more preferably 80 μm or less. Due to the average secondary particle size of the fluoropolymer particles being within the above range, a thick coating film having a uniform thickness can be easily obtained without impairing fluidity.

The apparent density of the second powder is preferably 0.60 to 1.00 g/mL. The apparent density of the powder can be measured in accordance with JIS K 6891-5.3.

(Fluorine-containing compound having hydrophilic group)

The first powder and the second powder (herein, both may be collectively referred to as the "powder of the present disclosure") contain a fluorine-containing compound having a hydrophilic group. The fluorine-containing compound having a hydrophilic group includes a fluorine-containing surfactant that is added during polymerization and a fluorine-containing compound having a hydrophilic group that is produced by the polymerization of a fluoromonomer.

The hydrophilic group contained in the fluorine-containing compound as used herein is preferably an anionic group such as an acid group, e.g., $-NH_2$, $-PO_3M$, $-OPO_3M$, $-SO_3M$, $-OSO_3M$, and -COOM, wherein M represents a cation. In particular, the hydrophilic group is preferably $-SO_3M$ or -COOM, and more preferably -COOM.

The content of the fluorine-containing compound having a hydrophilic group in the powder is 250 ppb by mass or less, preferably 100 ppb by mass or less, more preferably 50 ppb by mass or less, even more preferably 25 ppb by mass or less, yet more preferably 10 ppb by mass or less, and particularly preferably 5 ppb by mass or less, and is preferably more than 0 ppb by mass, based on the powder.

The content of the fluorine-containing compound having a hydrophilic group in the powder can be regulated by, for example, polymerizing a fluoromonomer in the presence of a fluorine-containing surfactant, a polymerization initiator, and an aqueous medium to produce an aqueous dispersion containing primary particles of a fluoropolymer, then adding a relatively large amount of a radical generator to the aqueous dispersion, and heat-treating the mixture.

The content of the fluorine-containing compound having a hydrophilic group in the powder can be quantified by a known method. For example, the content can be quantified by LC/MS analysis.

First, methanol is added to the powder to perform extraction, and the resulting extract is subjected to LC/MS analysis. To further increase extraction efficiency, treatment by Soxhlet extraction, ultrasonic treatment, or the like may be performed. The resulting extract is suitably concentrated by nitrogen purging, and the fluorine-containing compound in the concentrated extract is measured by LC/MS.

From the resulting LC/MS spectrum, molecular weight information is extracted, and a match with the structural formula of a candidate fluorine-containing compound having a hydrophilic group is checked.

Thereafter, aqueous solutions having five or more different content levels of the confirmed fluorine-containing compound having a hydrophilic group are prepared, and LC/MS analysis of the aqueous solution of each content is carried out, and the relationship between the content and the area for the content is plotted, and a calibration curve is drawn.

Then, using the calibration curve, the area of the LC/MS chromatogram of the fluorine-containing compound having a hydrophilic group in the extract can be converted to the content of the fluorine-containing compound having a hydrophilic group.

Note that the resulting extract can be concentrated by nitrogen purging, thus enabling the lower quantification limit of the measurement method to be lowered.

The powder in one embodiment contains at least a fluorine-containing surfactant as the fluorine-containing compound having a hydrophilic group. The fluorine-containing surfactant may be a fluorine-containing surfactant commonly used in the polymerization of a fluoromonomer. A typical compound as the fluorine-containing surfactant is a fluorine-containing surfactant having a molecular weight of 1,000 g/mol or less and preferably 800 g/mol or less.

The fluorine-containing surfactant is not limited as long as it is a surfactant containing at least one fluorine atom, and conventionally known fluorine-containing surfactants can be used.

Examples of the fluorine-containing surfactant include anionic fluorine-containing surfactants. The anionic fluorine-containing surfactant may be, for example, a fluorine atom-containing surfactant having 20 or fewer carbon atoms in total in the portion excluding the anionic group.

The fluorine-containing surfactant may also be a fluorine-containing surfactant in which the molecular weight of the anionic moiety is 1,000 or less.

The "anionic moiety" means a portion of the fluorine-containing surfactant excluding the cation. For example, in the case of $F(CF_2)_{n1}COOM$ represented by formula (I), which will be described below, the anionic moiety is the "$F(CF_2)_{n1}COO$" portion.

Examples of the fluorine-containing surfactant also include fluorine-containing surfactants having a Log POW of 3.5 or less. The Log POW is a partition coefficient between 1-octanol and water, which is represented by Log P (wherein P represents the ratio between the concentration of the fluorine-containing surfactant in octanol and the concentration of the fluorine-containing surfactant in water in a phase-separated octanol/water (1:1) liquid mixture containing the fluorine-containing surfactant).

The Log POW is calculated by performing HPLC on standard substances (heptanoic acid, octanoic acid, nonanoic acid, and decanoic acid) having a known octanol/water partition coefficient under conditions having column: TOSOH ODS-120T column (φ4.6 mm × 250 mm, manufactured by Tosoh Corporation), eluent: acetonitrile/0.6% by mass $HClO_4$ solution =1/1 (vol/vol %), flow rate: 1.0 ml/min, sample volume: 300 μL, column temperature: 40°C, detection light: UV 210 nm to construct a calibration curve concerning each elution time and known octanol/water partition coefficient, and determining the HPLC elution time of a sample liquid based on the calibration curve.

Specific examples of the fluorine-containing surfactant include those described in U.S. Patent Application Publication No. 2007/0015864, U.S. Patent Application Publication No. 2007/0015865, U.S. Patent Application Publication No. 2007/0015866, and U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3,250,808, U.S. Patent No. 3,271,341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

Examples of the anionic fluorine-containing surfactant include a compound represented by the following general formula ($N^0$):

$$X^{n0}\text{-}Rf^{n0}\text{-}Y^0 \qquad (N^0)$$

wherein $X^{n0}$ is H, Cl, or F; $Rf^{n0}$ is a linear, branched, or cyclic alkylene group having 3 to 20 carbon atoms in which some or all of H are replaced by F, the alkylene group optionally containing one or more ether bonds in which some of H are optionally replaced by Cl; and $Y^0$ is an anionic group.

The anionic group $Y^0$ may be -COOM, $-SO_2M$, or $-SO_3M$, and may be -COOM or $-SO_3M$.

M is H, a metal atom, $NR^7_4$, optionally substituted imidazolium, optionally substituted pyridinium, or optionally substituted phosphonium, and $R^7$ is H or an organic group.

Examples of the metal atom include alkali metals (Group 1) and alkaline earth metals (Group 2), such as Na, K, or Li.

$R^7$ may be H or a $C_{1-10}$ organic group, may be H or a $C_{1-4}$ organic group, and may be H or a $C_{1-4}$ alkyl group.

M may be H, a metal atom, or $NR^7_4$, may be H, an alkali metal (Group 1), an alkaline earth metal (Group 2), or $NR^7_4$, and may be H, Na, K, Li, or $NH_4$.

In the $Rf^{n0}$, 50% or more of H atoms may be replaced by fluorine atoms.

Examples of the compound represented by general formula ($N^0$) include a compound represented by the following general formula ($N^1$):

$$X^{n0}\text{-}(CF_2)_{m1}\text{-}Y^0 \qquad (N^1)$$

wherein $X^{n0}$ is H, Cl, or F; m1 is an integer of 3 to 15; and $Y^0$ is as defined above;
a compound represented by the following general formula ($N^2$):

$$Rf^{n1}\text{-}O\text{-}(CF(CF_3)CF_2O)_{m2}CFX^{n1}\text{-}Y^0 \qquad (N^2)$$

wherein $Rf^{n1}$ is a perfluoroalkyl group having 1 to 5 carbon atoms; m2 is an integer of 0 to 3; $X^{n1}$ is F or $CF_3$; and $Y^0$ is as defined above;
a compound represented by the following general formula ($N^3$):

$Rf^{n2}(CH_2)_{m3}-(Rf^{n3})_q-Y^0$ (N3)

wherein $Rf^{n2}$ is a partially or fully fluorinated alkyl group having 1 to 13 carbon atoms and optionally containing an ether bond and/or a chlorine atom; m3 is an integer of 1 to 3; $Rf^{n3}$ is a linear or branched perfluoroalkylene group having 1 to 3 carbon atoms, q is 0 or 1; and $Y^0$ is as defined above;
a compound represented by the following general formula ($N^4$) :

$Rf^{n4}-O-(CY^{n1}Y^{n2})_pCF_2-Y^0$ (N4)

wherein $Rf^{n4}$ is a linear or branched, partially or fully fluorinated alkyl group having 1 to 12 carbon atoms and optionally containing an ether bond; $Y^{n1}$ and $Y^{n2}$ are the same or different and are each independently H or F; p is 0 or 1; and $Y^0$ is as defined above; and
a compound represented by the following general formula ($N^5$):

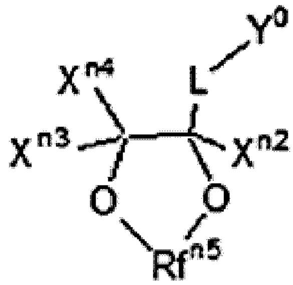

(N5)

wherein $X^{n2}$, $X^{n3}$, and $X^{n4}$ may be the same or different and are each independently H, F, or a linear or branched, partially or fully fluorinated alkyl group having 1 to 6 carbon atoms and optionally containing an ether bond; $Rf^{n5}$ is a linear or branched partially or fully fluorinated alkylene group having 1 to 3 carbon atoms and optionally containing an ether bond; L is a linking group; and $Y^0$ is as defined above, provided that the total number of carbon atoms in $X^{n2}$, $X^{n3}$, $X^{n4}$, and $Rf^{n5}$ is 18 or less.

More specific examples of the compound represented by the above general formula ($N^0$) include a perfluorocarboxylic acid (I) represented by the following general formula (I), an ω-H perfluorocarboxylic acid (II) represented by the following general formula (II), a perfluoroethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the following general formula (XII), and a compound (XIII) represented by the following general formula (XIII).

The perfluorocarboxylic acid (I) is represented by the following general formula (I):

$F(CF_2)_{n1}COOM$ (I)

wherein n1 is an integer of 3 to 13; and M is H, a metal atom, $NR^7_4$, optionally substituted imidazolium, optionally substituted pyridinium, or optionally substituted phosphonium, wherein $R^7$ is H or an organic group.

The ω-H perfluorocarboxylic acid (II) described above is represented by the following general formula (II):

$H(CF_2)_{n2}COOM$ (II)

wherein n2 is an integer of 4 to 15; and M is as defined above.

The perfluoroethercarboxylic acid (III) is represented by the following general formula (III):

$Rf^1-O-(CF(CF_3)CF_2O)_{n3}CF(CF_3)COOM$ (III)

wherein $Rf^1$ is a perfluoroalkyl group having 1 to 5 carbon atoms; n3 is an integer of 0 to 3; and M is as defined above.

The perfluoroalkylalkylenecarboxylic acid (IV) is represented by the following general formula (IV):

$$Rf^2(CH_2)_{n4}Rf^3COOM \qquad (IV)$$

wherein $Rf^2$ is a perfluoroalkyl group having 1 to 5 carbon atoms; $Rf^3$ is a linear or branched perfluoroalkylene group having 1 to 3 carbon atoms; n4 is an integer of 1 to 3; and M is as defined above.

The alkoxyfluorocarboxylic acid (V) is represented by the following general formula (V):

$$Rf^4\text{-O-}CY^1Y^2CF_2\text{-COOM} \qquad (V)$$

wherein $Rf^4$ is a linear or branched partially or fully fluorinated alkyl group having 1 to 12 carbon atoms and optionally containing an ether bond and/or a chlorine atom; $Y^1$ and $Y^2$ are the same or different and are each H or F; and M is as defined above.

The perfluoroalkylsulfonic acid (VI) is represented by the following general formula (VI):

$$F(CF_2)_{n5}SO_3M \qquad (VI)$$

wherein n5 is an integer of 3 to 14; and M is as defined above.

The ω-H perfluorosulfonic acid (VII) is represented by the following general formula (VII):

$$H(CF_2)_{n6}SO_3M \qquad (VII)$$

wherein n6 is an integer of 4 to 14; and M is as defined above.

The perfluoroalkylalkylenesulfonic acid (VIII) is represented by the following general formula (VIII):

$$Rf^5(CH_2)_{n7}SO_3M \qquad (VIII)$$

wherein $Rf^5$ is a perfluoroalkyl group having 1 to 13 carbon atoms; n7 is an integer of 1 to 3; and M is as defined above.

The alkylalkylenecarboxylic acid (IX) is represented by the following general formula (IX):

$$Rf^6(CH_2)_{n8}COOM \qquad (IX)$$

wherein $Rf^6$ is a linear or branched partially or fully fluorinated alkyl group having 1 to 13 carbon atoms and optionally containing an ether bond; n8 is an integer of 1 to 3; and M is as defined above.

The fluorocarboxylic acid (X) is represented by the following general formula (X):

$$Rf^7\text{-O-}Rf^8\text{-O-}CF_2\text{-COOM} \qquad (X)$$

wherein $Rf^7$ is a linear or branched, partially or fully fluorinated alkyl group having 1 to 6 carbon atoms and optionally containing an ether bond and/or a chlorine atom; $Rf^8$ is a linear or branched, partially or fully fluorinated alkyl group having 1 to 6 carbon atoms; and M is as defined above.

The alkoxyfluorosulfonic acid (XI) is represented by the following general formula (XI):

$$Rf^9\text{-O-}CY^1Y^2CF_2\text{-}SO_3M \qquad (XI)$$

wherein $Rf^9$ is a linear or branched partially or fully fluorinated alkyl group having 1 to 12 carbon atoms and optionally containing an ether bond and optionally containing chlorine; $Y^1$ and $Y^2$ are the same or different and are each H or F; and M is as defined above.

The compound (XII) is represented by the following general formula (XII):

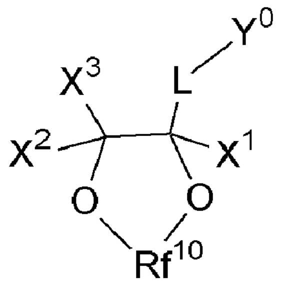

(XII)

wherein $X^1$, $X^2$, and $X^3$ may be the same or different and are H, F, and a linear or branched partially or fully fluorinated alkyl group having 1 to 6 carbon atoms and optionally containing an ether bond; $Rf^{10}$ is a perfluoroalkylene group having 1 to 3 carbon atoms; L is a linking group; and $Y^0$ is an anionic group.

$Y^0$ may be -COOM, -$SO_2M$, or -$SO_3M$, and may be -$SO_3M$ or COOM, wherein M is as defined above.

Examples of L include a single bond, and a partially or fully fluorinated alkylene group having 1 to 10 carbon atoms and optionally containing an ether bond.

The compound (XIII) is represented by the following general formula (XIII):

$$Rf^{11}\text{-O-}(CF_2CF(CF_3)O)_{n9}(CF_2O)_{n10}CF_2COOM \qquad (XIII)$$

wherein $Rf^{11}$ is a fluoroalkyl group having 1 to 5 carbon atoms and containing chlorine; n9 is an integer of 0 to 3; n10 is an integer of 0 to 3; and M is as defined above. An example of the compound (XIII) is $CF_2ClO(CF_2CF(CF_3)O)_{n9}(CF_2O)_{n10}CF_2COONH_4$ (a mixture having an average molecular weight of 750, n9 and n10 in the formula are as defined above).

As described above, examples of the anionic fluorine-containing surfactant include a carboxylic acid-based surfactant and a sulfonic acid-based surfactant.

The fluorine-containing surfactant may be one fluorine-containing surfactant, or may be a mixture containing two or more fluorine-containing surfactants.

The fluorine-containing surfactant preferably does not have a methylene group (-$CH_2$-), and more preferably does not have a C-H bond. The use of a fluorine-containing surfactant that does not have a methylene group (-$CH_2$-) or a C-H bond within the molecule enables the fluoromonomer to be smoothly polymerized in the presence of an aqueous medium.

The number of H atoms that the hydrophobic group of the fluorine-containing surfactant has is preferably 0 or 1, and more preferably 0. The use of a fluorine-containing surfactant in which the number of H atoms bonded to carbon atoms constituting the hydrophobic group is small enables the fluoromonomer to be smoothly polymerized in the presence of an aqueous medium. The number of carbon atoms in the hydrophobic group of the fluorine-containing surfactant having a hydrophobic group and a hydrophilic group is preferably 1 to 50, more preferably 3 to 20, and even more preferably 6 to 12. The hydrophobic group usually constitutes the above-described "portion excluding the anionic group" in the molecular structure of the fluorine-containing surfactant. Examples of the hydrophilic group include groups exemplified as the anionic group $Y^0$. The fluorine-containing surfactant may be a saturated fluorinated surfactant in which all carbon atoms bonded to the hydrophobic group are substituted with fluorine atoms.

Examples of fluorine-containing surfactants, among the above-described anionic fluorine-containing surfactants, include compounds represented by general formula ($N^1$), compounds represented by general formula ($N^2$), and compounds represented by general formula ($N^4$):

$$Rf^{n4}\text{-O-}(CY^{n1}F)_pCF_2\text{-}Y^0 \qquad (N^4)$$

wherein $Rf^{n4}$ is a linear or branched, partially or fully fluorinated alkyl group having 1 to 12 carbon atoms and optionally containing an ether bond (provided that those having -$CH_2$- are excluded), $Y^{n1}$ is H or F, p is 0 or 1, and $Y^0$ is as defined above; and compounds represented by general formula ($N^5$):

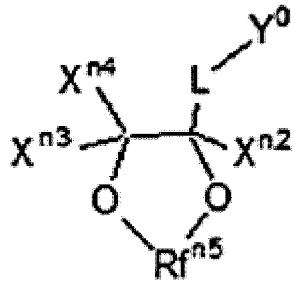

(N 5)

wherein $X^{n2}$, $X^{n3}$, and $X^{n4}$ may be the same or different and are each independently H, F, or a linear or branched, partially or fully fluorinated alkyl group having 1 to 6 carbon atoms and optionally containing an ether bond (provided that those having $-CH_2-$ are excluded), provided that $X^{n3}$ and $X^{n4}$ are not simultaneously H; $Rf^{n5}$ is a linear or branched, partially or fully fluorinated alkylene group having 1 to 3 carbon atoms and optionally containing an ether bond (provided that those having $-CH_2-$ are excluded); L is a linking group; and $Y^0$ is as defined above, provided that the total number of carbon atoms in $X^{n2}$, $X^{n3}$, $X^{n4}$, and $Rf^{n5}$ is 18 or less.

Among the above-described anionic fluorine-containing surfactants, the fluorine-containing surfactant is preferably at least one selected from the group consisting of perfluorocarboxylic acid (I) represented by general formula (I), ω-H perfluorocarboxylic acid (II) represented by general formula (II), perfluoroethercarboxylic acid (III) represented by general formula (III), perfluoroalkylalkylenecarboxylic acid (IV) represented by general formula (IV), perfluoroalkoxyfluorocarboxylic acid (V) represented by general formula (V), perfluoroalkylsulfonic acid (VI) represented by general formula (VI), ω-H perfluorosulfonic acid (VII) represented by general formula (VII), perfluoroalkylalkylenesulfonic acid (VIII) represented by general formula (VIII), fluorocarboxylic acid (X) represented by general formula (X): $Rf^7-O-Rf^8-O-CF_2-COOM$ wherein $Rf^7$ is a linear or branched, partially or fully fluorinated alkyl group having 1 to 6 carbon atoms and optionally containing an ether bond and/or a chlorine atom (provided that those having $-CH_2-$ are excluded), $Rf^8$ is a linear or branched, partially or fully fluorinated alkyl group having 1 to 6 carbon atoms (provided that those having $-CH_2-$are excluded), and M is as defined above, an alkoxyfluorosulfonic acid (XI) represented by general formula (XI): $Rf^9-O-CY^1FCF_2-SO_3M$

wherein $Rf^9$ is a linear or branched, partially or fully fluorinated alkyl group having 1 to 12 carbon atoms, optionally containing an ether bond, and optionally containing chlorine (provided that those having $-CH_2-$ are excluded), $Y^1$ is H or F, and M is as defined above, a compound (XII) represented by general formula (XII):

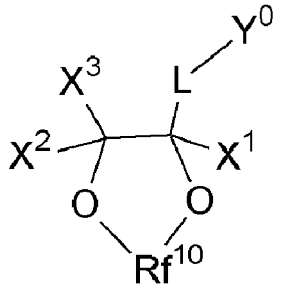

(X I I)

wherein $X^1$, $X^2$, and $X^3$ may be the same or different and are each independently H, F, and a linear or branched, partially or fully fluorinated alkyl group having 1 to 6 carbon atoms and optionally containing an ether bond (provided that those having $-CH_2-$ are excluded), provided that $X^2$ and $X^3$ are not simultaneously H, $Rf^{10}$ is a perfluoroalkylene group having 1 to 3 carbon atoms, L is a linking group, and $Y^0$ is an anionic group, and

a compound (XIII) represented by general formula (XIII): $Rf^{11}-O-(CF_2CF(CF_3)O)_{n9}(CF_2O)_{n10}CF_2COOM$

wherein $Rf^{11}$ is a fluoroalkyl group having 1 to 5 carbon atoms containing chlorine (provided that those having $-CH_2-$ are excluded), n9 is an integer of 0 to 3, n10 is an integer of 0 to 3, and M is as defined above. The use of such a fluorine-containing surfactant enables the fluoromonomer to be smoothly polymerized in the presence of an aqueous medium.

Examples of the fluorine-containing surfactant include compounds represented by the following formulae. The fluorine-containing surfactant may be a mixture of these compounds.

$F(CF_2)_7COOM$,

$F(CF_2)_5COOM$,

$H(CF_2)_6COOM$,

$H(CF_2)_7COOM$,

$CF_3O(CF_2)_3OCHFCF_2COOM$,

$C_3F_7OCF(CF_3)CF_2OCF(CF_3)COOM$,

$CF_3CF_2CF_2OCF(CF_3)COOM$,

$CF_3CF_2OCF_2CF_2OCF_2COOM$,

$C_2F_5OCF(CF_3)CF_2OCF(CF_3)COOM$,

$CF_3OCF(CF_3)CF_2OCF(CF_3)COOM$,

$CF_2ClCF_2CF_2OCF(CF_3)CF_2OCF_2COOM$,

$CF_2ClCF_2CF_2OCF_2CF(CF_3)OCF_2COOM$,

$CF_2ClCF(CF_3)OCF(CF_3)CF_2OCF_2COOM$,

$CF_2ClCF(CF_3)OCF_2CF(CF_3)OCF_2COOM$,

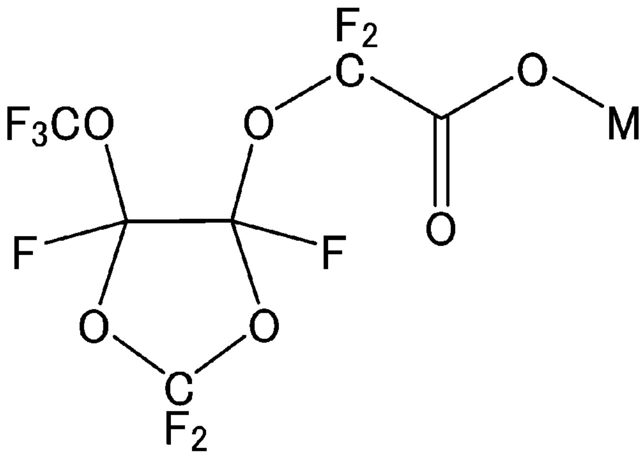

wherein M is H, a metal atom, $NR^7_4$, optionally substituted imidazolium, optionally substituted pyridinium, or optionally substituted phosphonium, and $R^7$ is H or an organic group.

When the powder contains at least a fluorine-containing surfactant as the fluorine-containing compound having a hydrophilic group, the content of the fluorine-containing surfactant in the powder is preferably 250 ppb by mass or less, more preferably 100 ppb by mass or less, even more preferably 50 ppb by mass or less, and yet more preferably 25 ppb by mass or less, and is preferably more than 0 ppb by mass, based on the powder.

The powder in one embodiment contains perfluoroethercarboxylic acid as the fluorine-containing compound having a hydrophilic group. Perfluoroethercarboxylic acid is preferably a compound (III) represented by the following general formula (III):

General formula (III): $Rf^1\text{-O-}(CF(CF_3)CF_2O)_{n3}CF(CF_3)COOM$

wherein $Rf^1$ is a perfluoroalkyl group having 1 to 5 carbon atoms; n3 is an integer of 0 to 3; and M is H, a metal atom, $NR^7_4$, optionally substituted imidazolium, optionally substituted pyridinium, or optionally substituted phosphonium, wherein $R^7$ is H or an organic group.

When the powder contains at least perfluoroethercarboxylic acid as the fluorine-containing compound having a hydrophilic group, the content of perfluoroethercarboxylic acid in the powder is preferably 250 ppb by mass or less, more preferably 100 ppb by mass or less, even more preferably 50 ppb by mass or less, yet more preferably 25 ppb by mass or less, particularly preferably 10 ppb by mass or less, and most preferably 5 ppb by mass or less, and is preferably more than 0 ppb by mass, based on the powder.

The powder in one embodiment contains a compound represented by the following general formula (H1) as the fluorine-containing compound having a hydrophilic group:

General formula (H1): $[X\text{-}Rf\text{-}A^-]_iM^{i+}$

wherein X is H, Cl, Br, F, or I; Rf is a linear or branched, partially fluorinated or fully fluorinated aliphatic group, or a linear or branched, partially fluorinated or fully fluorinated aliphatic group interrupted by at least one oxygen atom; $A^-$ is an acid group; $M^{i+}$ is a cation having a valence of i; and i represents an integer of 1 to 3.

The powder in one embodiment contains a compound represented by the following general formula (H2) as the fluorine-containing compound having a hydrophilic group:

General formula (H2): $[C_{n-1}F_{2n-1}COO^-]M^+$

wherein n is an integer of 4 to 14, and $M^+$ represents a cation.

The compound represented by general formula (H2) (perfluoroalkanoic acid) is known to be formed during polymerization when perfluoroalkyl vinyl ether or the like is used as a modifying monomer (see International Publication No. WO 2019/161153).

When the powder contains at least a compound represented by general formula (H2) as the fluorine-containing compound having a hydrophilic group, the content of the compound represented by general formula (H2) in the powder is preferably 25 ppb by mass or less, more preferably 10 ppb by mass or less, even more preferably 5 ppb by mass or less, and yet more preferably 1 ppb by mass or less, and is preferably more than 0 ppb by mass, based on the powder.

The powder in one embodiment contains a compound represented by the following general formula (H3) as the fluorine-containing compound having a hydrophilic group:

General formula (H3): $[R^1\text{-}O\text{-}L\text{-}CO_2^-]M^+$

wherein $R^1$ is a linear or branched, partially fluorinated or fully fluorinated aliphatic group, or a linear or branched, partially fluorinated or fully fluorinated aliphatic group interrupted by at least one oxygen atom; L represents a linear or branched non-fluorinated, partially fluorinated, or fully fluorinated alkylene group; and $M^+$ represents a cation.

When the powder contains at least a compound represented by general formula (H3) as the fluorine-containing compound having a hydrophilic group, the content of the compound represented by general formula (H3) in the powder is preferably 250 ppb by mass or less, more preferably 100 ppb by mass or less, even more preferably 50 ppb by mass or less, and yet more preferably 25 ppb by mass or less, and is preferably more than 0 ppb by mass, based on the powder.

The powder in one embodiment contains a compound represented by general formula (H4) as the fluorine-containing compound having a hydrophilic group:

General Formula (H4): $H\text{-}Rf^{n0}\text{-}Y^0$

wherein $Rf^{n0}$ is a linear, branched, or cyclic alkylene group having 3 to 20 carbon atoms in which some or all of H are replaced by F; the alkylene group optionally containing one or more ether bonds in which some of H are optionally replaced by Cl; and $Y^0$ is an anionic group.

Examples of the compound represented by general formula (H4) include compounds represented by any of the following general formulae:

General formula: $[H\text{-}(CF_2)_mCO_2^-]M^+$

wherein m is an integer of 3 to 19, and $M^+$ represents a cation.

General formula: $[H\text{-}(CF_2)_{m2}\text{-}(CF(CF_3))_{m3}\text{-}CO_2^-]M^+$

wherein m2 is an integer of 1 to 17, m3 is an integer of 1 to 9, and $M^+$ represents a cation, provided that m2 and m3 are selected so as to satisfy $3 \leq (m2 + 2 \times m3) \leq 19$, and the repeating units occur in any order in the formulae.

When the powder contains at least a compound represented by general formula (H4) as the fluorine-containing

compound having a hydrophilic group, the content of the compound represented by general formula (H4) in the powder is preferably 250 ppb by mass or less, more preferably 100 ppb by mass or less, even more preferably 50 ppb by mass or less, yet more preferably 25 ppb by mass or less, particularly preferably 10 ppb by mass or less, and most preferably 5 ppb by mass or less, and is preferably more than 0 ppb by mass, based on the powder.

(Fluoropolymer)

The powder of the present disclosure contains particles of at least one fluoropolymer selected from the group consisting of a tetrafluoroethylene (TFE)/perfluoro(alkyl vinyl ether) copolymer, a TFE/hexafluoropropylene copolymer, and a TFE/perfluoro(alkyl vinyl ether)/hexafluoropropylene copolymer.
The fluoropolymer is preferably a fluororesin, and more preferably a melt-fabricable fluororesin.
An example of the perfluoro(alkyl vinyl ether) includes a compound represented by the general formula:

$$CF_2=CF\text{-}ORf$$

wherein Rf represents a perfluoroalkyl group having 1 to 10 carbon atoms. When the perfluoroalkyl group has two or more carbon atoms, the perfluoroalkyl group may have an ether oxygen disposed between two carbon atoms.
The perfluoroalkyl group preferably has 1 to 5 carbon atoms, and more preferably 1 to 3 carbon atoms.
Examples of the perfluoroalkyl group include a perfluoromethyl group, a perfluoroethyl group, a perfluoropropyl group, a perfluorobutyl group, a perfluoropentyl group, and a perfluorohexyl group.
Perfluoro(alkyl vinyl ether) is preferably at least one selected from the group consisting of perfluoro(methyl vinyl ether), perfluoro(ethyl vinyl ether), and perfluoro(propyl vinyl ether), more preferably at least one selected from the group consisting of perfluoro(methyl vinyl ether) and perfluoro(propyl vinyl ether), and even more preferably perfluoro(propyl vinyl ether).
The TFE/perfluoro(alkyl vinyl ether) copolymer is a copolymer containing at least a TFE unit and a perfluoro(alkyl vinyl ether) unit. The TFE/perfluoro(alkyl vinyl ether) copolymer preferably has a monomer composition (mol%) of TFE:perfluoro(alkyl vinyl ether) = (90 to 99.7):(0.3 to 10), and more preferably (97 to 99): (1 to 3).
The TFE/perfluoro(alkyl vinyl ether) copolymer may contain, in addition to a TFE unit and a perfluoro(alkyl vinyl ether) unit, a further-monomer unit that is copolymerizable with TFE and perfluoro(alkyl vinyl ether). The further monomer is preferably a fluoromonomer (excluding TFE and perfluoro(alkyl vinyl ether)).
Examples of the fluoromonomer (excluding TFE and perfluoro(alkyl vinyl ether)) include hexafluoropropylene, chlorotrifluoroethylene, vinyl fluoride, vinylidene fluoride, trifluoroethylene, fluoroalkyl ethylene, fluoroalkyl allyl ether, trifluoropropylene, pentafluoropropylene, trifluorobutene, tetrafluoroisobutene, hexafluoroisobutene, a fluoromonomer represented by the general formula: $CHX^{101}=CX^{102}Rf^{101}$ (wherein one of $X^{101}$ and $X^{102}$ is H and the other is F, and $Rf^{101}$ is a linear or branched fluoroalkyl group having 1 to 12 carbon atoms), a fluorinated vinyl heterocyclic compound, and a monomer that provides a crosslinking site.
The fluoromonomer (excluding TFE and perfluoro(alkyl vinyl ether)), in particular, is preferably hexafluoropropylene.
The content of the further-monomer unit in the TFE/perfluoro (alkyl vinyl ether) copolymer may be 0.1 to 2% by mass based on all monomer units.
The TFE/hexafluoropropylene copolymer is a copolymer containing at least a TFE unit and hexafluoropropylene unit. The monomer composition (% by mass) of the TFE/hexafluoropropylene copolymer is preferably TFE:hexafluoropropylene = (60 to 95): (5 to 40) and more preferably (85 to 92):(8 to 15).
The TFE/hexafluoropropylene copolymer may contain, in addition to a TFE unit and hexafluoropropylene unit, a further-monomer unit that is copolymerizable with TFE and hexafluoropropylene. The further monomer is preferably a fluoromonomer (excluding TFE and hexafluoropropylene).
Examples of the fluoromonomer (excluding TFE and hexafluoropropylene) include chlorotrifluoroethylene, vinyl fluoride, vinylidene fluoride, trifluoroethylene, perfluoro(alkyl vinyl ether), fluoroalkyl ethylene, fluoroalkyl allyl ether, trifluoropropylene, pentafluoropropylene, trifluorobutene, tetrafluoroisobutene, hexafluoroisobutene, a fluoromonomer represented by the general formula: $CHX^{101}=CX^{102}Rf^{101}$ (wherein one of $X^{101}$ and $X^{102}$ is H and the other is F, and $Rf^{101}$ is a linear or branched fluoroalkyl group having 1 to 12 carbon atoms), a fluorinated vinyl heterocyclic compound, and a monomer that provides a crosslinking site.
The fluoromonomer (excluding TFE and hexafluoropropylene), in particular, is preferably perfluoro(alkyl vinyl ether).
In particular, the fluoropolymer is preferably at least one selected from the group consisting of a tetrafluoroethylene/perfluoro(alkyl vinyl ether) copolymer, a tetrafluoroethylene/hexafluoropropylene copolymer, and a tetrafluoroethylene/perfluoro(alkyl vinyl ether)/hexafluoropropylene copolymer.
The melt flow rate of the fluoropolymer at 372°C may be 0.1 to 500 g/10 min, is preferably 20 g/10 min or more and

more preferably 25 g/10 min, and is preferably 80 g/10 min or less.

MFR as used herein is a value obtained in accordance with ASTM D1238 as a mass (g/10 min) of a polymer flowing out from a nozzle having an inner diameter of 2.1 mm and a length of 8 mm in 10 min at 372°C under a load of 5 kg using a melt indexer.

The melting point of the fluoropolymer may be 180 to 324°C.

The melting point of the tetrafluoroethylene/perfluoro(alkyl vinyl ether) copolymer may be 180 to 324°C, is preferably 220°C or higher, more preferably 240°C or higher, even more preferably 260°C or higher, yet more preferably 280°C or higher, and particularly preferably 300°C or higher, and is preferably 320°C or lower and more preferably 315°C or lower.

The melting point of the tetrafluoroethylene/hexafluoropropylene copolymer and the tetrafluoroethylene/perfluoro(alkyl vinyl ether)/hexafluoropropylene copolymer may be 180 to 320°C, is preferably 220°C or higher and more preferably 240°C or higher, and is preferably 300°C or lower and more preferably 280°C or lower.

The melting point can be measured with a differential scanning calorimeter [DSC].

The fluoropolymer may have a functional group. The functional group is introduced into the fluoropolymer by, for example, a chain transfer agent or a polymerization initiator used when producing the fluoropolymer. For example, in the case of using an alcohol as a chain transfer agent, or a peroxide having a structure of $-CH_2OH$ as a polymerization initiator, $-CH_2OH$ is introduced to the main-chain terminal of the fluoropolymer. Alternatively, the functional group is introduced to the side-chain terminal of the fluoropolymer by polymerizing a monomer having the functional group.

The number of functional groups per $10^6$ carbon atoms in the main chain of the fluoropolymer is preferably more than 50. The number of functional groups per $10^6$ carbon atoms in the main chain of the fluoropolymer is preferably 100 or more, more preferably 150 or more, and even more preferably 200 or more, and is preferably 1,200 or less, more preferably 1,000 or less, and even more preferably 800 or less. When a fluoropolymer stabilizing treatment such as a treatment that involves bringing the fluoropolymer into contact with fluorine gas is performed, the number of functional groups in the fluoropolymer is usually reduced, and it is thus not possible to obtain a fluoropolymer having the number of functional groups per $10^6$ main-chain carbon atoms within the above range.

For identification of the kind of functional group and measurement of the number of functional groups, infrared spectroscopy can be used.

Specifically, the number of functional groups is measured by the following method. First, the fluoropolymer is formed by cold press to prepare a film having a thickness of 0.25 to 0.30 mm. This film is analyzed by Fourier transform infrared spectroscopy to obtain an infrared absorption spectrum of the fluoropolymer, and a difference spectrum against a base spectrum that is completely fluorinated and has no functional groups is obtained. From an absorption peak of a specific functional group observed on this difference spectrum, the number N of the functional groups per $1\times10^6$ carbon atoms in the fluoropolymer is calculated according to the following expression (A):

$$N = I \times K/t \cdot (A)$$

I: Absorbance

K: Correction factor

t: Thickness of film (mm)

**Table 1**

| Functional Group | Absorption Frequency ($cm^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| $-COOCH_3$ | 1795 | 680 | 342 | $C_7F_{15}COOCH_3$ |
| $-CONH_2$ | 3436 | 506 | 460 | $C_7H_{15}CONH_2$ |
| $-CH_2OH_2$, -OH | 3648 | 104 | 2236 | $C_7H_{15}CH_2OH$ |
| $-CF_2H$ | 3020 | 8.8 | 26485 | $H(CF_2CF_2)_3CH_2OH$ |

(continued)

| Functional Group | Absorption Frequency ($cm^{-1}$) | Molar Extinction Coefficient (l/cm/mol) | Correction Factor | Model Compound |
|---|---|---|---|---|
| $-CF=CF_2$ | 1795 | 635 | 366 | $CF_2=CF_2$ |

Regarding some functional groups, for reference, the absorption frequencies, the molar absorption coefficients, and the correction factors are shown in Table 1. The molar absorption coefficients are those determined from FT-IR measurement data of low molecular model compounds.

[Table 1]

The absorption frequencies of $-CH_2CF_2H$, $-CH_2COF$, $-CH_2COOH$, $-CH_2COOCH_3$ and $-CH_2CONH_2$ are lower by a few tens of kaysers ($cm^{-1}$) than those of $-CF_2H$, -COF, -COOH free and -COOH bonded, $-COOCH_3$ and $-CONH_2$ shown in the Table, respectively.

For example, the number of functional groups -COF is the total of the number of functional groups determined from an absorption peak having an absorption frequency of 1,883 $cm^{-1}$ derived from $-CF_2COF$ and the number of functional groups determined from an absorption peak having an absorption frequency of 1,840 $cm^{-1}$ derived from $-CH_2COF$.

The functional groups are functional groups present at the main-chain terminals or side-chain terminals of the fluoropolymer, and functional groups present in the main chain or the side chains. The number of functional groups may be the total numbers of $-CF=CF_2$, $-CF_2H$, -COF, -COOH, $-COOCH_3$, $-CONH_2$, and $-CH_2OH$.

The powder of the present disclosure may contain a further component other than the fluoropolymer. Examples of the further component include fillers, plasticizers, processing aids, mold release agents, pigments, flame retarders, lubricants, light stabilizers, weathering stabilizers, electrically conductive agents, antistatic agents, ultraviolet absorbents, antioxidants, foaming agents, perfumes, oils, softening agents, and dehydrofluorining agents.

The above further polymer other than the copolymer may be contained as the further component. Examples of the further polymer include fluororesins other than the fluoropolymer, fluoroelastomers, and non-fluorinated polymers.

The powder of the present disclosure can be suitably used as a powder coating material. The powder coating material is usually applied by coating the coating target with the powder coating material and then firing the powder coating material to form a film. The coating film thus applied can be used in a variety of applications as a corrosion-resistant lining or the like.

The method for applying the powder coating material is not limited, and examples include spraying, electrostatic spraying, electrostatic spray coating, fluidized bed immersion coating, electrostatic fluidized bed immersion coating, and rotolining.

A coating film formed from the powder coating material is usually formed by applying the powder coating material to the coating target, and then firing the powder coating material to form a film. The temperature at which the powder coating material applied to the coating target is fired is, for example, 295 to 400°C. The firing time is, for example, 20 to 180 minutes. When the powder coating material is applied and fired multiple times, the firing time refers to the duration of one firing session.

The film thickness of the coating film formed from the powder coating material may be suitably determined according to the use, and may be, for example, 20 to 10,000 μm. The film thickness is the film thickness attained after firing, and may be the film thickness of a coating film obtained by a single application of the coating material, or may be the film thickness obtained by two or more applications of the coating material.

The coating target is not limited, and may be a coating target to which corrosion resistance is desirably imparted. Examples of such coating targets include those to which a corrosion-resistant lining is applied, such as tanks, vessels, towers, valves, pumps, joints, and other piping materials; and those to which a different corrosion-resistant processing is applied, such as chemical and medical instruments, wafer baskets, coil bobbins, tower packings, valves for chemicals, and pump impellers.

The coating target may be a material that has received a surface treatment such as washing or sandblasting or that has been coated with a primer as necessary.

The powder of the present disclosure can also be used as a processing aid, a molding material, or the like.

The powder of the present disclosure can be used in, for example, the following applications:

food packaging films, and members for liquid transfer for food production apparatuses, such as lining materials of fluid transfer lines, packings, sealing materials and sheets, used in food production processes;

chemical stoppers and packaging films for chemicals, and members for chemical solution transfer, such as lining

materials of liquid transfer lines, packings, sealing materials and sheets, used in chemical production processes;
inner surface lining materials of chemical solution tanks and piping of chemical plants and semiconductor factories;
members for fuel transfer, such as O (square) rings, tubes, packings, valve stem materials, hoses and sealing materials, used in fuel systems and peripheral equipment of automobiles, and such as hoses and sealing materials, used in ATs of automobiles;
members used in engines and peripheral equipment of automobiles, such as flange gaskets of carburetors, shaft seals, valve stem seals, sealing materials and hoses, and other vehicular members such as brake hoses, hoses for air conditioners, hoses for radiators, and electric wire coating materials of automobiles;
members for chemical solution transfer for semiconductor production apparatuses, such as O (square) rings, tubes, packings, valve stem materials, hoses, sealing materials, rolls, gaskets, diaphragms and joints;
members for coating and inks, such as coating rolls, hoses and tubes, for coating facilities, and containers for inks;
members for food and beverage transfer, such as tubes, hoses, belts, packings and joints for food and beverage, food packaging materials, and members for glass cooking appliances; members for waste liquid transport, such as tubes and hoses for waste transport;
members for high-temperature liquid transport, such as tubes and hoses for high-temperature liquid transport;
members for steam piping, such as tubes and hoses for steam piping;
corrosion-proof tapes for piping, such as tapes wound on piping of decks and the like of ships;
various coating materials, such as electric wire coating materials, optical fiber coating materials, and transparent front side coating materials installed on the light incident side and back side lining materials of photoelectromotive elements of solar cells;
diaphragms and sliding members such as various types of packings of diaphragm pumps;
films for agriculture, and weathering covers for various kinds of roof materials, sidewalls and the like;
interior materials used in the building field, and coating materials for glasses such as non-flammable fireproof safety glasses; and
lining materials such as laminate steel sheets used in the household electric field.

The powder of the present disclosure can be suitably produced by the production method of the present disclosure. Next, the production method of the present disclosure will now be described in detail.

**2.** Method for producing powder

In one embodiment, provided is
a method for producing a powder containing particles of a fluoropolymer, the method comprising:

polymerizing a fluoromonomer in a reactor in the presence of a fluorine-containing surfactant, a polymerization initiator, and an aqueous medium to produce an aqueous dispersion containing primary particles of at least one fluoropolymer selected from the group consisting of a tetrafluoroethylene/perfluoro(alkyl vinyl ether) copolymer, a tetrafluoroethylene/hexafluoropropylene copolymer, and a tetrafluoroethylene/perfluoro(alkyl vinyl ether)/hexafluoropropylene copolymer;
after the aqueous dispersion is produced, carrying out at least one of the operations of removing from the reactor the fluoromonomer remaining in the reactor, and recovering the aqueous dispersion in the reactor and accommodating the aqueous dispersion in a container different from the reactor;
adding to the aqueous dispersion a radical generator in an amount of not less than 5 mol times per mole of the fluorine-containing surfactant used in the polymerization;
subjecting to a heat treatment the aqueous dispersion containing the radical generator;
coagulating the fluoropolymer in the aqueous dispersion subjected to the heat treatment to produce a wet powder containing particles of the fluoropolymer; and
drying the wet powder at a temperature not higher than a temperature that is 50°C lower than a melting point of the fluoropolymer to produce the powder

(hereinafter this method may be referred to as the "first production method").
In the first production method of the present disclosure, an aqueous dispersion is prepared, then a relatively large amount of a radical generator is added to the resulting aqueous dispersion, the aqueous dispersion containing the radical generator is subjected to a heat treatment, and the fluoropolymer in the aqueous dispersion subjected to the heat treatment is recovered and dried at a relatively low temperature. The use of such a production method makes it possible to produce a powder containing particles of a fluoropolymer, having excellent handleability, and having a reduced content of a fluorine-containing compound having a hydrophilic group.
That is, the use of the first production method of the present disclosure makes it possible to produce a powder

having a content of a fluorine-containing compound having a hydrophilic group of 250 ppb by mass or less. Moreover, the use of the first production method of the present disclosure makes it possible to produce a powder containing fluoropolymer particles having an average secondary particle size of 0.5 to 10 μm.

In one embodiment, provided is a method for producing a powder containing particles of a fluoropolymer, the method comprising:

polymerizing a fluoromonomer in a reactor in the presence of a fluorine-containing surfactant, a polymerization initiator, and an aqueous medium to produce an aqueous dispersion containing primary particles of at least one fluoropolymer selected from the group consisting of a tetrafluoroethylene/perfluoro(alkyl vinyl ether) copolymer, a tetrafluoroethylene/hexafluoropropylene copolymer, and a tetrafluoroethylene/perfluoro(alkyl vinyl ether)/hexafluoropropylene copolymer;
after the aqueous dispersion is produced, carrying out at least one of the operations of removing from the reactor the fluoromonomer remaining in the reactor, and recovering the aqueous dispersion in the reactor and accommodating the aqueous dispersion in a container different from the reactor;
adding to the aqueous dispersion a radical generator in an amount of not less than 5 mol times per mole of the fluorine-containing surfactant used in the polymerization;
subjecting to a heat treatment the aqueous dispersion containing the radical generator;
coagulating the fluoropolymer in the aqueous dispersion subjected to the heat treatment to produce a wet powder containing particles of the fluoropolymer;
drying the wet powder to produce a base powder containing the fluoropolymer; and
densifying a base powder containing the fluoropolymer with a roll under conditions that provide a specific gravity not less than 90% of a true specific gravity, pulverizing the densified powder, then removing fine particles in a 3 to 40% by mass range of an overall particle size distribution of pulverized powder by pneumatic classification, and further removing coarse particles in a 1 to 20% by mass range of the overall particle size distribution of the pulverized powder by classification

(hereinafter this method may be referred to as the "second production method").

In the second production method of the present disclosure, an aqueous dispersion is prepared, then a relatively large amount of a radical generator is added to the resulting aqueous dispersion, the aqueous dispersion containing the radical generator is subjected to a heat treatment, the fluoropolymer in the aqueous dispersion subjected to the heat treatment is recovered, the fluoropolymer is dried, the resulting dried matter is compressed, the resulting compressed matter is pulverized, and the resulting pulverized powder is classified. The use of such a production method makes it possible to produce a powder containing particles of a fluoropolymer, having excellent flowability, and having a reduced content of a fluorine-containing compound having a hydrophilic group.

That is, the use of the second production method of the present disclosure makes it possible to produce a powder having a content of a fluorine-containing compound having a hydrophilic group of 250 ppb by mass or less. Moreover, the use of the second production method of the present disclosure makes it possible to produce a powder having a uniform particle morphology, a narrow particle size distribution, and excellent fluidity.

Hereinafter, the steps and the materials used in the steps will now be described in detail.

(Polymerization of fluoromonomer)

In the production method of the present disclosure, first a fluoromonomer is polymerized in a reactor in the presence of a fluorine-containing surfactant, a polymerization initiator, and an aqueous medium to prepare an aqueous dispersion containing a fluoropolymer.

The polymerization of a fluoromonomer can be performed by charging a reactor with a fluoromonomer, a fluorine-containing surfactant, a polymerization initiator, an aqueous medium, and optionally other additives, stirring the contents of the reactor, retaining the reactor at a predetermined polymerization temperature, and then adding a predetermined amount of a polymerization initiator to initiate the polymerization reaction. After the polymerization reaction is initiated, the fluoromonomer, the polymerization initiator, the fluorine-containing surfactant, a chain transfer agent, and the like may be further added depending on the purpose. The method for polymerizing the fluoromonomer is not limited, and is preferably an emulsion polymerization method.

(Fluorine-containing surfactant)

The fluorine-containing surfactant used in the polymerization of the fluoromonomer may be a fluorine-containing surfactant that can be contained in the powder of the present disclosure, and such a fluorine-containing surfactant is preferably used.

The amount of the fluorine-containing surfactant added is preferably 10 ppm by mass to 10% by mass, is more preferably 100 ppm by mass or more and even more preferably 300 ppm by mass or more, and is more preferably 5% by mass or less and even more preferably 1% by mass or less, based on the aqueous medium.

(Fluoromonomer)

In the production method of the present disclosure, at least TFE and at least one selected from the group consisting of perfluoro(alkyl vinyl ether) and hexafluoropropylene are polymerized as fluoromonomers, thus making it possible to prepare an aqueous dispersion containing primary particles of at least one fluoropolymer selected from the group consisting of a TFE/perfluoro(alkyl vinyl ether) copolymer, a TFE/hexafluoropropylene copolymer, and a tetrafluoroethylene/perfluoro(alkyl vinyl ether)/hexafluoropropylene copolymer.

The fluoromonomers for producing these copolymers may be the fluoromonomers constituting the fluoropolymer contained in the powder of the present disclosure, and such fluoromonomers are preferably used.

Moreover, a further monomer that is copolymerizable with TFE and perfluoro(alkyl vinyl ether) or a further monomer that is copolymerizable with TFE and hexafluoropropylene may be also polymerized. Also, these further monomers may be the fluoromonomers constituting the fluoropolymer contained in the powder of the present disclosure, and such further monomers are preferably used.

The amount of each fluoromonomer used is preferably such that the fluoropolymer contained in the powder of the present disclosure is obtained.

(Polymerization initiator)

The polymerization initiator used in the polymerization of the fluoromonomer is not limited as long as it is a polymerization initiator capable of generating radicals within the polymerization temperature range, and known oil-soluble and/or water-soluble polymerization initiators can be used. Moreover, the polymerization initiator can also be combined with a reducing agent or the like to form a redox agent and initiate polymerization. The concentration of the polymerization initiator is suitably determined according to the type of monomer, the molecular weight of the target fluoropolymer, and the reaction rate.

The polymerization initiator may be an oil-soluble radical polymerization initiator or a water-soluble radical polymerization initiator.

The oil-soluble radical polymerization initiator may be a known oil-soluble peroxide, and representative examples include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl]peroxides such as di(ω-hydro-dodecafluoroheptanoyl)peroxide, di(ω-hydro-tetradecafluorooctanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl) peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

The water-soluble radical polymerization initiator may be a known water-soluble peroxide, and examples include ammonium salts, potassium salts, and sodium salts of persulphuric acid, perboric acid, perchloric acid, perphosphoric acid, and percarbonic acid, organic peroxides of disuccinic acid peroxide and diglutaric acid peroxide, t-butyl permaleate, and t-butyl hydroperoxide. A reducing agent such as a sulfite may be contained together, and the amount thereof may be 0.1 to 20 times the amount of the peroxide.

(Aqueous medium)

The aqueous medium for use in the polymerization of the fluoromonomer is a reaction medium in which the polymerization is performed, and means a liquid containing water. The aqueous medium is not limited as long as it contains water, and may be an aqueous medium containing water and, for example, a fluorine-free organic solvent such as ether or ketone, and/or a fluorine-containing organic solvent having a boiling point of 40°C or lower.

The aqueous medium is preferably an aqueous medium solely containing water or an aqueous medium solely containing water and a fluorine-free organic solvent, and is more preferably an aqueous medium solely containing water because the polymerization of the fluoromonomer can proceed smoothly and, also, deterioration of the efficiency of removing the fluorine-containing compound having a hydrophilic group can be suppressed.

The moisture content in the aqueous medium is preferably 90% or more, more preferably 95% or more, even more preferably 99.0% or more, yet more preferably 99.5% or more, and particularly preferably 99.9% or more, and may be 100% based on the mass of the aqueous medium because the polymerization of the fluoromonomer can proceed smoothly and, also, deterioration of the efficiency of removing the fluorine-containing compound having a hydrophilic group can be suppressed.

(Chain transfer agent)

In the production method of the present disclosure, the fluoromonomer can be polymerized also in the presence of a chain transfer agent. The use of a chain transfer agent enables the polymerization rate and the molecular weight to be regulated. Examples of the chain transfer agent include esters such as dimethyl malonate, diethyl malonate, methyl acetate, ethyl acetate, butyl acetate, and dimethyl succinate, as well as isopentane, methane, ethane, propane, methanol, isopropanol, acetone, various mercaptans, various halogenated hydrocarbons such as carbon tetrachloride, and cyclohexane.

The amount of the chain transfer agent used is usually 1 to 50,000 ppm by mass, and preferably 1 to 20,000 ppm by mass, based on the total amount of the fluoromonomer fed. The amount of the chain transfer agent used is preferably an amount such that the chain transfer agent is completely consumed during the polymerization of the fluoromonomer and does not remain in the aqueous dispersion containing the fluoropolymer so as not to deteriorate as much as possible the efficiency of removing the fluorine-containing compound having a hydrophilic group. Accordingly, the amount of the chain transfer agent used is more preferably 10,000 ppm by mass or less, even more preferably 5,000 ppm by mass or less, yet more preferably 1,000 ppm by mass or less, particularly preferably 500 ppm by mass or less, and most preferably 200 ppm by mass or less, based on the total amount of the fluoromonomer fed.

The chain transfer agent may be added to the reaction vessel at once before the beginning of the polymerization, may be added at once after the beginning of the polymerization, may be added in multiple portions during the polymerization, or may be added continuously during the polymerization.

(Other additives)

Additives such as buffers, pH adjusters, stabilizing aids, and dispersion stabilizers can be used in the polymerization of the fluoromonomer. In the polymerization of the fluoromonomer, radical scavengers and decomposers may be added to regulate the polymerization rate and the molecular weight. Also, fluorine-free anionic surfactants, fluorine-free nonionic surfactants, fluorine-free cationic surfactants, and the like may be used in the polymerization of the fluoromonomer.

The stabilizing aid is preferably paraffin wax, fluorine-containing oil, a fluorine-containing solvent, silicone oil, or the like. One stabilizing aid may be used singly, or two or more may be used in combination. The stabilizing aid is more preferably paraffin wax. The paraffin wax may be in the form of liquid, semi-solid, or solid at room temperature, and is preferably a saturated hydrocarbon having 12 or more carbon atoms. The paraffin wax usually preferably has a melting point of 40 to 65°C, and more preferably 50 to 65°C.

The amount of the stabilizing aid used is preferably 0.1 to 12% by mass, and more preferably 0.1 to 8% by mass, based on the mass of the aqueous medium used. Desirably, the stabilizing aid is sufficiently hydrophobic so that the stabilizing aid is completely separated from the aqueous dispersion after polymerization, and does not serve as a contaminating component.

(Polymerization conditions)

The fluoromonomer can be polymerized at normal pressure and temperature. Usually, the polymerization temperature is 5 to 120°C, and the polymerization pressure is 0.05 to 10 MPaG. The polymerization temperature and the polymerization pressure are suitably determined according to the type of monomer, the molecular weight of the target fluoropolymer, the reaction rate, and the like.

(Aqueous dispersion obtained by polymerization)

Polymerization of the fluoromonomer yields an aqueous dispersion containing the fluoropolymer. The content of the fluoropolymer in the aqueous dispersion as polymerized is usually 8 to 50% by mass based on the aqueous dispersion.

The aqueous dispersion obtained by polymerizing the fluoromonomer usually contains, other than the fluoropolymer, a fluorine-containing surfactant used when polymerizing the fluoromonomer, as the fluorine-containing compound having a hydrophilic group. Also, the aqueous dispersion obtained by polymerizing the fluoromonomer may contain, other than the fluoropolymer, a fluorine-containing compound having a hydrophilic group produced by

polymerizing the fluoromonomer.

A typical fluorine-containing compound having a hydrophilic group in the aqueous dispersion obtained by polymerization is a fluorine-containing compound having a hydrophilic group and having a molecular weight of 1,000 g/mol or less. The production method of the present disclosure makes it possible to eventually produce a powder having a reduced content of the fluorine-containing compound having a hydrophilic group and having a molecular weight of 1,000 g/mol or less.

In one embodiment, the aqueous dispersion obtained by the polymerization contains a fluorine-containing surfactant added during the polymerization as the fluorine-containing compound having a hydrophilic group. The fluorine-containing surfactant added during the polymerization is as described above for the fluorine-containing surfactant used in the polymerization of the fluoromonomer.

The content of the fluorine-containing compound having a hydrophilic group in the aqueous dispersion obtained by the polymerization may be 200 ppm by mass or more, 300 ppm by mass or more, or 400 ppm by mass or more, and may be 10% by mass or less, 1% by mass or less, or 0.5% by mass or less, based on the aqueous dispersion.

The content of the fluorine-containing surfactant, used when polymerizing the fluoromonomer, in the aqueous dispersion obtained by the polymerization may be 200 ppm by mass or more, 300 ppm by mass or more, or 400 ppm by mass or more, and may be 10% by mass or less, 1% by mass or less, or 0.5% by mass or less, based on the aqueous dispersion.

In one embodiment, the aqueous dispersion obtained by the polymerization contains perfluoroethercarboxylic acid as the fluorine-containing compound having a hydrophilic group: Perfluoroethercarboxylic acid is preferably a compound (III) represented by the following general formula (III):

General formula (III): $Rf^1\text{-O-}(CF(CF_3)CF_2O)_{n3}CF(CF_3)COOM$

wherein $Rf^1$ is a perfluoroalkyl group having 1 to 5 carbon atoms; n3 is an integer of 0 to 3; and M is H, a metal atom, $NR^7_4$, optionally substituted imidazolium, optionally substituted pyridinium, or optionally substituted phosphonium, wherein $R^7$ is H or an organic group.

When the aqueous dispersion obtained by the polymerization contains at least perfluoroethercarboxylic acid as the fluorine-containing compound having a hydrophilic group, the content of perfluoroethercarboxylic acid in the aqueous dispersion obtained by the polymerization may be 200 ppb by mass or more, 300 ppb by mass or more, or 400 ppb by mass or more, and may be 10% by mass or less, 1% by mass or less, or 0.5% by mass or less, based on the aqueous dispersion.

In one embodiment, the aqueous dispersion obtained by the polymerization contains a compound represented by the following general formula (H1) as the fluorine-containing compound having a hydrophilic group:

General formula (H1): $[X\text{-}Rf\text{-}A^-]_i M^{i+}$

wherein X is H, Cl, Br, F, or I; Rf is a linear or branched, partially fluorinated or fully fluorinated aliphatic group, or a linear or branched, partially fluorinated or fully fluorinated aliphatic group interrupted by at least one oxygen atom; $A^-$ is an acid group; $M^{i+}$ is a cation having a valence of i; and i represents an integer of 1 to 3.

In one embodiment, the aqueous dispersion obtained by the polymerization contains a compound represented by the following general formula (H2) as the fluorine-containing compound having a hydrophilic group:

General formula (H2): $[C_{n-1}F_{2n-1}COO^-]M^+$

wherein n is an integer of 4 to 14, and $M^+$ represents a cation.

The compound represented by general formula (2) (perfluoroalkanoic acid) is known to be formed during polymerization when perfluoro(alkyl vinyl ether) or the like is used as a fluoromonomer (see International Publication No. WO 2019/161153).

In one embodiment, the aqueous dispersion obtained by the polymerization contains a compound represented by the following general formula (H3) as the fluorine-containing compound having a hydrophilic group:

General formula (H3): $[R^1\text{-O-L-}CO_2^-]M^+$

wherein $R^1$ is a linear or branched, partially fluorinated or fully fluorinated aliphatic group, or a linear or branched, partially fluorinated or fully fluorinated aliphatic group interrupted by at least one oxygen atom; L represents a linear or branched non-fluorinated, partially fluorinated, or fully fluorinated alkylene group; and $M^+$ represents a cation.

In one embodiment, the aqueous dispersion obtained by the polymerization contains a compound represented by general formula (H4) as the fluorine-containing compound having a hydrophilic group:

General Formula (H4): $H\text{-}Rf^{n0}\text{-}Y^0$

wherein $Rf^{n0}$ is a linear, branched, or cyclic alkylene group having 3 to 20 carbon atoms in which some or all of H are replaced by F; the alkylene group optionally containing one or more ether bonds in which some of H are optionally replaced by Cl; and $Y^0$ is an anionic group.

Examples of the compound represented by general formula (H4) include compounds represented by any of the following general formulae:

General formula: $[H\text{-} (CF_2)_mCO_2^-]M^+$

wherein m is an integer of 3 to 19, and $M^+$ represents a cation.

General formula: $[H\text{-} (CF_2)_{m2}\text{-}(CF(CF_3))_{m3}\text{-}CO_2^-]M^+$

wherein m2 is an integer of 1 to 17, m3 is an integer of 1 to **9,** and $M^+$ represents a cation, provided that m2 and m3 are selected so as to satisfy $3 \leq (m2 + 2 \times m3) \leq 19$, and the repeating units occur in any order in the formulae.

(Removal of fluoromonomer or recovery of aqueous dispersion)

In the production method of the present disclosure, after producing the aqueous dispersion by polymerization and before adding a radical generator to the aqueous dispersion, at least one of the following operations can be carried out: (a) removing from the reactor the fluoromonomer remaining in the reactor, and (b) recovering the aqueous dispersion in the reactor and accommodating the aqueous dispersion in a container different from the reactor. In particular, a method that removes the fluoromonomer from the reactor is preferably used because the subsequent steps can be performed in the same reactor used in the polymerization, and thus productivity of the powder is increased.

After the aqueous dispersion is prepared, preferably the stirring of the contents of the reactor is terminated, and then the fluoromonomer is removed or the aqueous dispersion is recovered, because the subsequent operations become easy, or the polymerization of the fluoromonomer can be smoothly terminated.

The method for removing the fluoromonomer from the reactor is not limited. After the aqueous dispersion is prepared, the fluoromonomer may be removed from the reactor by terminating the stirring of the contents of the reactor if desired and discharging gas until the pressure inside the reactor reaches normal pressure, the fluoromonomer may be removed from the reactor by reducing the pressure inside the reactor to lower than 0.0 MPaG, or the fluoromonomer in the reactor may be replaced with an inert gas such as nitrogen gas by feeding the inert gas to the reactor. Also, the fluoromonomer may be removed from the reactor as a result of reacting the entirety of the fluoromonomer in the reactor to convert it to a fluoropolymer. As long as the removal from the reactor of the fluoromonomer remaining in the reactor can be performed to such an extent that the polymerization reaction of the fluoromonomer is sufficiently terminated, a small amount of residual fluoromonomer may be allowed in the reactor. The removed fluoromonomer can be recovered by a known means. The recovered fluoromonomer may be reused to produce a fluoropolymer.

A preferable method for removing the fluoromonomer from the reactor may be a method involving, after the aqueous dispersion is prepared, terminating the stirring of the contents of the reactor if desired, reducing the pressure inside the reactor to lower than 0.0 MPaG, and then feeding an inert gas to the reactor. Reducing the pressure inside the reactor and feeding an inert gas may be repeated multiple times.

When the fluoromonomer is polymerized at a temperature higher than normal temperature, the reactor may be cooled before removing the fluoromonomer from the reactor or after removing the fluoromonomer from the reactor. When the fluoromonomer is removed from the reactor by means of, for example, gas discharge or nitrogen purge, an unreacted fluoromonomer especially in a liquid form may remain in the reactor, and thus cooling the reactor can sufficiently suppress the reaction of the unreacted fluoromonomer from proceeding.

The method for recovering the aqueous dispersion in the reactor and accommodating the aqueous dispersion in a container different from the reactor used in the polymerization is not limited. For example, after the aqueous dispersion is prepared, the stirring of the contents of the reactor may be terminated if desired, the reactor may be opened, and the aqueous dispersion in the reactor may be poured into another container, or after the aqueous dispersion is prepared, the stirring of the contents of the reactor may be terminated if desired, the aqueous dispersion may be fed from the reactor to another container through a pipe that connects the reactor and another container.

To terminate the polymerization reaction of the fluoromonomer, a polymerization terminator (a radical scavenger) may be added.

The polymerization terminator may be a compound having no reinitiation ability after addition or chain transfer to a free radical in the polymerization system. Specifically, used is a compound that readily undergoes a chain transfer reaction with a primary radical or a propagating radical and then generates a stable radical that does not react with a

monomer or a compound that readily undergoes an addition reaction with a primary radical or a propagating radical to generate a stable radical. The activity of what is commonly referred to as a chain transfer agent is characterized by the chain transfer constant and the reinitiation efficiency, and, among chain transfer agents, those having almost 0% reinitiation efficiency are referred to as polymerization terminators. The polymerization terminator is preferably at least one selected from the group consisting of aromatic hydroxy compounds, aromatic amines, N,N-diethylhydroxylamine, quinone compounds, terpenes, thiocyanates, and cupric chloride ($CuCl_2$). Examples of aromatic hydroxy compounds include unsubstituted phenols, polyhydric phenols, salicylic acid, m- or p-salicylic acid, gallic acid, and naphthol. Examples of unsubstituted phenols include o-, m-, or p-nitrophenol, o-, m-, or p-aminophenol, and p-nitrosophenol. Examples of polyhydric phenols include catechol, resorcin, hydroquinone, pyrogallol, phloroglucin, and naphthresorcinol. Examples of aromatic amines include o-, m-, or p-phenylenediamine and benzidine. Examples of quinone compounds include hydroquinone, o-, m- or p-benzoquinone, 1,4-naphthoquinone, and alizarin. Examples of thiocyanates include ammonium thiocyanate ($NH_4SCN$), potassium thiocyanate (KSCN), and sodium thiocyanate (NaSCN). In particular, the polymerization terminator is preferably a quinone compound, and more preferably hydroquinone.

(Radical generator)

In the production method of the present disclosure, a radical generator is added in an amount of not less than 5 mol times per mole of the fluorine-containing surfactant used in the polymerization to the aqueous dispersion after carrying out at least one of the operations (a) and (b) and before subjecting the aqueous dispersion to heat treatment. Adding a relatively large amount of a radical generator enables the content of the fluorine-containing compound having a hydrophilic group to be sufficiently reduced.

The aqueous dispersion to which the radical generator is added may be the aqueous dispersion remaining in the reactor, or may be the aqueous dispersion recovered from the reactor and accommodated in another container.

The radical generator is not limited as long as it is a compound that can generate radicals by being decomposed at the heat treatment temperature. The radical generator is preferably a water-soluble radical generator because radicals can be easily diffused in the aqueous dispersion.

Examples of the radical generator include organic peroxides, inorganic peroxides, organic azo compounds, and combinations of oxidizing agents and reducing agents, and preferable is at least one selected from the group consisting of inorganic peroxides, organic peroxides, and combinations of oxidizing agents and reducing agents.

The inorganic peroxide is preferably a water-soluble inorganic peroxide. Examples of the inorganic peroxide include hydrogen peroxide, perchlorates, perborates, perphosphates, percarbonates, and persulfates, and a persulfate is preferable. The persulfate is preferably at least one selected from the group consisting of ammonium persulfate, sodium persulfate, and potassium persulfate, and more preferably ammonium persulfate.

The organic peroxide is preferably a water-soluble organic peroxide. Examples of the organic peroxide include peroxydicarbonates such as disuccinic acid peroxide and diglutaric acid peroxide.

The radical generator may be a combination of an oxidizing agent and a reducing agent. The use of a combination of an oxidizing agent and a reducing agent enables radicals to be generated from the radical generator through a redox reaction between the oxidizing agent and the reducing agent, and thus the temperature during heat treatment can be lowered.

Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of persulfates include ammonium persulfate and potassium persulfate. Examples of sulfites include sodium sulfite and ammonium sulfite. In order to increase the decomposition rate of the oxidizing agent, a copper salt or an iron salt is also preferably added. The copper salt may be copper(II) sulfate, and the iron salt may be iron(II) sulfate.

Examples of the combination of an oxidizing agent and a reducing agent include potassium permanganate/oxalic acid, ammonium persulfate/bisulfite/iron sulfate, manganese triacetate/oxalic acid, cerium ammonium nitrate/oxalic acid, and bromate/bisulfite, and potassium permanganate/oxalic acid is preferable. When using a combination of an oxidizing agent and a reducing agent, one of an oxidizing agent and a reducing agent may be added to the aqueous dispersion in advance, and then the other may be added continuously or intermittently.

Because the efficiency of removing the fluorine-containing compound having a hydrophilic group can be further increased, the amount of the radical generator added is preferably not less than 5 mol times and more preferably not less than 10 mol times, and is preferably not more than 1,000 mol times, more preferably not more than 500 mol times, and even more preferably not more than 100 mol times, per mole of the fluorine-containing surfactant used in the polymerization. The production method of the present disclosure is for producing a powder and, accordingly, adding a relatively large amount of radical generator may cause the fluoropolymer in the aqueous dispersion to precipitate without any adverse effect.

The method for adding the radical generator is not limited. The radical generator may be added as-is to the

aqueous dispersion, or a solution containing the radical generator may be prepared and added to the aqueous dispersion. The radical generator may be added while stirring the aqueous dispersion, or the aqueous dispersion may be stirred after adding the radical generator.

The temperature of the aqueous dispersion to which the radical generator is added is not limited, and it may be the temperature of the aqueous dispersion after the fluoromonomer is polymerized, may be the temperature reached by cooling the aqueous dispersion after the fluoromonomer is polymerized, or may be the temperature of the heat treatment. That is, after the radical generator is added to the aqueous dispersion, the aqueous dispersion may be heated for heat treatment, or after the aqueous dispersion is heated to the temperature for heat treatment, the radical generator may be added to the aqueous dispersion.

(Heat treatment)

In the production method of the present disclosure, the aqueous dispersion to which a radical generator has been added (the aqueous dispersion containing a radical generator) is subjected to heat treatment. Performing the heat treatment on the aqueous dispersion containing a relatively large amount of a radical generator enables the content of the fluorine-containing compound having a hydrophilic group in the aqueous dispersion to be surprisingly reduced.

The content of the fluoropolymer in the aqueous dispersion may be regulated before the heat treatment. The content of the fluoropolymer can be regulated by a known method such as concentration or dilution.

The content of the fluoropolymer in the aqueous dispersion to be subjected to the heat treatment is preferably 1% by mass or more, more preferably 5% by mass or more, and even more preferably 10% by mass or more based on the mass of the aqueous dispersion because the fluoropolymer aqueous dispersion can be produced at high productivity without impairing the efficiency of removing the fluorine-containing compound having a hydrophilic group. The upper limit of the content of the fluoropolymer is preferably 60% by mass or less, more preferably 55% by mass or less, and even more preferably 50% by mass or less.

The content of the fluorine-containing surfactant added during the polymerization in the aqueous dispersion to be subjected to heat treatment is preferably 500 mass ppm or more and more preferably 1,000 mass ppm or more, and is preferably 10% by mass or less, more preferably 5% by mass or less, and even more preferably 1% by mass or less, based on the mass of the fluoropolymer in the aqueous dispersion.

The content of the fluorine-containing compound having a hydrophilic group that is produced by the polymerization of the fluoromonomer and that is present in the aqueous dispersion to be subjected to heat treatment is preferably 500 ppb by mass or more and more preferably 1,000 ppb by mass or more, and is preferably 1,0% by mass or less, more preferably 0.1% by mass or less, and even more preferably 0.01% by mass or less, based on the mass of the fluoropolymer in the aqueous dispersion.

The content of the fluorine-containing compound having a hydrophilic group in the aqueous dispersion to be subjected to heat treatment (the total amount of the content of the fluorine-containing surfactant added during the polymerization and the content of the fluorine-containing compound having a hydrophilic group produced by the polymerization of the fluoromonomer) is preferably 500 ppb by mass or more and more preferably 1,000 ppb by mass or more, and is preferably 10% by mass or less, more preferably 5% by mass or less, and even more preferably 1% by mass or less, based on the fluoropolymer in the aqueous dispersion.

The temperature of the heat treatment is preferably 35°C or higher, more preferably 40°C or higher, even more preferably 45°C or higher, and particularly preferably 50°C or higher, and is preferably 120°C or lower, more preferably 110°C or lower, even more preferably 100°C or lower, and particularly preferably 90°C or lower, because the efficiency of removing the fluorine-containing compound having a hydrophilic group can be further increased. When performing the heat treatment on the aqueous dispersion to which a radical generator has been added, the temperature of the heat treatment is preferably equal to or higher than a temperature at which the radical generator degrades and generates a radical (a degradation temperature). The production method of the present disclosure is for producing a powder and, accordingly, performing the heat treatment at a relatively high temperature may cause the fluoropolymer in the aqueous dispersion to precipitate without any adverse effect.

In the heat treatment of the aqueous dispersion, it is not necessarily need to heat the aqueous dispersion as long as the aqueous dispersion can be maintained at a desired temperature or higher. For example, when the temperature of polymerizing the fluoromonomer is sufficiently high, and the temperature of the resulting aqueous dispersion is also sufficiently high, the heat treatment can be initiated before the resulting aqueous dispersion is cooled. However, preferably, the aqueous dispersion is cooled before and after removing the fluoromonomer from the reactor or recovering the aqueous dispersion in the reactor, then the aqueous dispersion is heated to the above temperature range, and such a temperature is maintained for a certain period of time because the temperature of the heat treatment can be easily controlled. The temperature of the aqueous dispersion to be subjected to heat treatment may be, for example, 30°C or lower.

The means of heating when performing the heat treatment while heating the aqueous dispersion is not limited. For example, a container accommodating the aqueous dispersion may be placed in a constant-temperature vessel and

heated, or the aqueous dispersion may be accommodated in a container equipped with a heater, and heated by the heater.

The pressure during heat treatment is not limited, and may be normal pressure. For example, when the temperature during the heat treatment is relatively high, and boiling of the aqueous dispersion needs to be suppressed, the pressure during the heat treatment may exceed normal pressure.

The heat treatment time is preferably 15 minutes or longer, more preferably 30 minutes or longer, and even more preferably 60 minutes or longer, and is preferably 1,200 minutes or shorter, more preferably 900 minutes or shorter, and even more preferably 600 minutes or shorter, because the efficiency of removing the fluorine-containing compound having a hydrophilic group can be further increased.

The heat treatment may be performed while stirring the aqueous dispersion.

(Preparation of wet powder and drying of wet powder)

In the first production method of the present disclosure, the fluoropolymer in the aqueous dispersion subjected to the heat treatment is coagulated to produce a wet powder containing fluoropolymer particles, and the wet powder is dried at a temperature not higher than a temperature that is 50°C lower than the melting point of the fluoropolymer to produce a powder containing the fluoropolymer particles.

In the second production method of the present disclosure, a base powder containing the fluoropolymer is produced in the same manner as in the first production method of the present disclosure except that the wet powder is dried at a given temperature. In the second production method of the present disclosure, while drying can be performed at a given temperature, drying may be performed at a low temperature as in the first production method of the present disclosure.

In the first and second production methods of the present disclosure, the method for coagulating the fluoropolymer is not limited. For example, the aqueous dispersion is diluted with water so as to have a polymer concentration of 5 to 20% by mass, optionally the pH is regulated to be neutral or alkaline, and then the dispersion is stirred in a vessel equipped with a stirrer more vigorously than the stirring during the polymerization of the fluoromonomer. The fluoropolymer may be coagulated by adding a water-soluble organic compound such as methanol or acetone, an inorganic salt such as potassium nitrate or ammonium carbonate, or an inorganic acid such as hydrochloric acid, sulfuric acid, or nitric acid as a coagulating agent to the aqueous dispersion, and stirring the mixture. After the fluoropolymer is coagulated, a wet powder containing fluoropolymer particles can be recovered. The wet powder may contain precipitates of the fluoropolymer precipitated by adding a radical generator, or precipitates of the fluoropolymer precipitated by heat treatment.

Before drying the wet powder, the wet powder may be washed. The wet powder can be washed with water or an organic solvent. Washing may be performed one or more times. Examples of the organic solvent used in washing include ethers, halogenated hydrocarbons, aromatic hydrocarbons, pyridines, nitriles, nitrogen-containing polar organic compounds, dimethyl sulfoxide, and alcohols.

In the first production method of the present disclosure, the wet powder is dried at a temperature not higher than a temperature that is 50°C lower than the melting point of the fluoropolymer. By drying the wet powder at a relatively low temperature, a powder having excellent handleability can be obtained.

In the first production method of the present disclosure, the drying temperature of the wet powder is not higher than a temperature that is 50°C lower than the melting point of the fluoropolymer, more preferably not higher than a temperature that is 70°C lower than the melting point of the fluoropolymer, and even more preferably not higher than a temperature that is 100°C lower than the melting point of the fluoropolymer.

In the first production method of the present disclosure, the drying temperature of the wet powder is preferably 250°C or lower, more preferably 230°C or lower, even more preferably 200°C or lower, and yet more preferably 180°C or lower.

In the first production method of the present disclosure, the drying temperature of the wet powder is preferably 80°C or higher, more preferably 100°C or higher, even more preferably 120°C or higher, and yet more preferably 140°C or higher. An excessively low drying temperature results in a long drying time and possibly an impaired productivity.

In the first production method of the present disclosure, the resulting powder may be classified or may be granulated. Also, the resulting powder may be pelletized. In the production method of the present disclosure, a powder having excellent handleability is directly obtained after drying and, accordingly, it is also a preferable embodiment that no aftertreatment is performed on the dried powder.

In the second production method of the present disclosure, the fluoropolymer-containing base powder obtained by drying the wet powder is densified using a roll under conditions that provide a specific gravity not less than 90% of a true specific gravity, pulverizing the densified powder, then removing fine particles in a 3 to 40% by mass range of the overall particle size distribution of pulverized powder by pneumatic classification, and further removing coarse particles in a 1 to 20% by mass range of the overall particle size distribution of the pulverized powder by classification.

Compressing the base powder using a roll usually provides a sheet containing the fluoropolymer. In the second production method of the present disclosure, the base powder is formed into a sheet using a roll, and the sheet is

compressed under conditions that provide a specific gravity not less than 90% of the true specific gravity (the specific gravity of a meltmolded article of the fluoropolymer). The specific gravity after compression is preferably 95% to 99% of the true specific gravity. When the compression specific gravity is less than 90% of the true specific gravity, the powder particles obtained after pulverization are similar to the aggregated fine powder obtained after polymerization and drying, thus the apparent density is small, and the flowability of the powder is poor. A compression specific gravity exceeding 99% of the true specific gravity makes it difficult to obtain a powder having excellent flowability.

The sheet formed with a roll has a thickness of 0.05 to 5 mm, and preferably 0.1 to 3 mm. As for the roll, preferable are two or more rolls arranged in a vertical, inverted L, or Z form, and specific examples include a calender roll, a mixing roll, and a roll compactor. In the formation of a sheet with a roll, the fluoropolymer receives strong shearing force during sheet formation, and air present in the particles of the base powder is expelled, thereby giving a homogeneous sheet.

The temperature at which the base powder is compressed is preferably 0 to 250°C, and more preferably 5 to 150°C.

The densified base powder (a sheet) is then pulverized. After the sheet is disintegrated to give disintegrated matter having 0.1 to 10 mm, the disintegrated matter may be further pulverized.

Pulverization is preferably carried out with a mechanical pulverizer. Examples of the mechanical pulverizer include impact pulverizers such as cutter mills, hammer mills, pin mills and jet mills, and frictional pulverizers that pulverize materials by shearing force.

The pulverization temperature is preferably -200°C to 100°C, is more preferably 20°C or higher, and is more preferably 50°C or lower.

The resulting pulverized powder is then classified. The pulverized powder can be classified by a method involving removing fine particles by pneumatic classification and then removing coarse particles by pneumatic classification with a mesh, or a vibrating screen. By removing coarse particles after removing fine particles, classification can be carried out highly efficiently while suppression the clogging of the mesh or the screen.

In pneumatic classification, the material to be pulverized is fed to a cylindrical classification chamber by reduced-pressure air (a blower) and dispersed by a swirling current at room temperature, and fine particles are separated by centrifugal force. A rotator such as a circular cone or rotor is disposed in the classification chamber to cause uniform swirling motion of the material and air. In the case of classification cones, the classification point is regulated by regulating the volume of secondary air and the gap between the classification cones. In the case of a rotor, the air volume in the classification chamber is regulated by the rotational speed of the rotor. The air pressure of the blower is 1 to 10 kg/cm$^2$, and preferably 3 to 6 kg/cm$^2$.

By pneumatic classification, fine particles in a range of 3 to 40% by mass and preferably 5 to 30% by mass of the overall particle size distribution of the pulverized powder are removed. When the amount of the removed fine particles is excessively small, the fluidity of the resulting powder cannot be sufficiently improved, while an excessively large amount of the removed fine particles is economically disadvantageous.

Next, coarse particles in a range of 1 to 20% by mass and preferably 2 to 10% by mass of the overall particle size distribution of the pulverized powder are removed by classification. When the amount of the removed coarse particles is excessively small, the fluidity of the resulting powder cannot be sufficiently improved, while an excessively large amount of the removed coarse particles is economically disadvantageous.

The removed fine particles and coarse particles can be reused as a feedstock of the powder.

The powder of the present disclosure can be used to prepare a liquid coating material composition. The liquid coating material composition of the present disclosure contains a powder having a reduced content of a fluorine-containing compound having a hydrophilic group, and thus provides a coating film having a large contact angle and a small frictional coefficient. The reason therefor is not clear, but it is conjectured that the liquid coating material composition contains a powder having a reduced content of the fluorine-containing compound having a hydrophilic group, thus the dispersion stability of the fluoropolymer powder in the liquid coating material composition is appropriately low, accordingly the fluoropolymer powder more likely floats to the surface of the coating film than other components during the formation of a coating film, and, as a result, the fluoropolymer content on the coating film surface is increased.

The liquid coating material composition of the present disclosure can be prepared by mixing the powder of the present disclosure with a solvent. Before or when being mixed with the solvent, the powder of the present disclosure may be pulverized using a pulverizer such as a ball mill to regulate the particle size of the powder. The liquid coating material composition of the present disclosure is prepared using a powder having excellent handleability, and is thus easily prepared.

Examples of the solvent include water and an organic solvent. Examples of the organic solvent include N-methyl-2-pyrrolidone, N-ethyl-2-pyrrolidone, N-butyl-2-pyrrolidone, 3-methoxy-N,N-dimethylpropanamide, N,N-dimethylacetamide, N,N-dimethylformamide, cresol, methyl isobutyl ketone, and xylene.

The content of the fluoropolymer powder in the liquid coating material composition is preferably 1 to 90% by weight, is more preferably 5% by weight or more, and is more preferably 80% by weight or less, based on the mass of the liquid coating material composition.

The liquid coating material composition may further contain a polymer compound different from the fluoropolymer. Examples of the polymer compound include polyamideimide (PAI), polyimide (PI), polyethersulfone (PES), polyarylene sulfide (PAS), polyetherimide, polyetheretherketone, and aromatic polyester. One polymer compound may be used singly, or two or more may be used in combination.
PAI is a resin composed of a polymer having an amide bond and an imide bond within the molecular structure. PAI is not limited, and examples include resins composed of high molecular weight polymers obtained by reactions such as a reaction between an aromatic diamine having an amide bond within the molecule and an aromatic tetracarboxylic acid such as pyromellitic acid; a reaction between an aromatic tricarboxylic acid such as trimellitic anhydride and a diamine such as 4,4-diaminophenyl ether or a diisocyanate such as diphenylmethane diisocyanate; and a reaction between a dibasic acid having an aromatic imide ring within the molecule and a diamine. Preferable PAI is composed of a polymer having an aromatic ring in the main chain in terms of having excellent heat resistance.
PI is a resin composed of a polymer having an imide bond within the molecular structure. PI is not limited, and may be, for example, a resin composed of a high molecular weight polymer obtained by, e.g., a reaction of an aromatic tetracarboxylic anhydride such as pyromellitic anhydride. PI is preferably composed of a polymer having an aromatic ring in the main chain in terms of having excellent heat resistance.
PES is a resin composed of a polymer having a repeating unit represented by the following general formula:

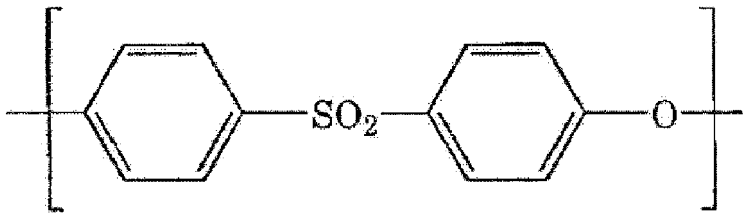

PES is not limited, and may be, for example, a resin composed of a polymer obtained by polycondensation of dichlorodiphenyl sulfone and bisphenol.
PAS is a resin composed of a polymer having a repeating unit represented by general formula -[Ar-S]- wherein Ar represents an arylene group. PAS is not limited, and an example may be polyphenylene sulfide (PPS).
The polymer compound is preferably at least one selected from the group consisting of PAI, PI, PES, and PPS, and more preferably PAI, because a coating film having even better adhesion to the substrate can be provided. The polymer compound is preferably PES from the viewpoint of suppressing coloring during firing and thus being capable of increasing the coloring flexibility of the coating film. One suitable embodiment is also to use a combination of PAI and PES as the polymer compound.
The content of the polymer compound is preferably 1% by mass or more and more preferably 3% by mass or more, and is preferably 15% by mass or less and more preferably 12% by mass or less, based on the liquid coating material composition.
In the liquid coating material composition, the volume ratio of the fluoropolymer (the fluoropolymer powder) to the polymer compound is preferably 10/90 to 90/10, is more preferably 15/85 or more, and is more preferably 85/15 or less.
The content of the fluoropolymer (the fluoropolymer powder) and the polymer compound in the liquid coating material composition is preferably 1 to 90% by weight, is more preferably 10% by weight or more, and is more preferably 80% by weight or less, based on the mass of the liquid coating material composition.
The liquid coating material composition may contain a further component as necessary. Examples of the further component include additives such as crosslinking agents, antistatic agents, heat stabilizers, foaming agents, foaming nucleating agents, antioxidants, surfactants, photopolymerization initiators, wear inhibitors, surface modifiers, various organic and inorganic pigments, copper inhibitors, bubble preventing agents, adhesion imparting agents, lubricants, processing aids, colorants, phosphorous stabilizers, lubricants, mold release agents, sliding materials, ultraviolet absorbers, dyes and pigments, reinforcing materials, anti-dripping agents, fillers, curing agents, ultraviolet curing agents, and flame retardants.
The content of the further component in the liquid coating material composition is preferably less than 30% by weight, more preferably less than 10% by weight, and even more preferably 5% by weight or less, based on the mass of the fluoropolymer (the fluoropolymer powder) and the polymer compound in the liquid coating material composition, and the lower limit is not limited and may be 0% by weight or more. That is, the liquid coating material composition may contain no further component.
The liquid coating material composition of the present disclosure can be used to obtain a coating film. The coating film obtained from the liquid coating material composition of the present disclosure has excellent water- and oil-repellency and low friction.
While embodiments have been described above, it will be understood that various changes in form and detail can

be made without departing from the gist and scope of the claims.

<1> According to the first aspect of the present disclosure, provided is

a powder containing a particle of a fluoropolymer, wherein
the powder contains a fluorine-containing compound having a hydrophilic group, and a content of the fluorine-containing compound having a hydrophilic group is 250 ppb by mass or less based on the powder;
the particles of the fluoropolymer have an average secondary particle size of 0.5 to 10 μm; and
the fluoropolymer is at least one selected from the group consisting of a tetrafluoroethylene/perfluoro(alkyl vinyl ether) copolymer, a tetrafluoroethylene/hexafluoropropylene copolymer, and a tetrafluoroethylene/perfluoro(alkyl vinyl ether)/hexafluoropropylene copolymer.

<2> According to the second aspect of the present disclosure, provided is
the powder according to the first aspect, wherein the powder has a specific surface area of 8 $m^2/g$ or more.
<3> According to the third aspect of the present disclosure, provided is
the powder according to the first or second aspect, wherein the particles of the fluoropolymer have an average primary particle size of less than 0.5 μm.
<4> According to the fourth aspect of the present disclosure, provided is
the powder according to any one of the first to third aspects, wherein the perfluoro(alkyl vinyl ether) is perfluoro(propyl vinyl ether).
<5> According to the fifth aspect of the present disclosure, provided is
the powder according to any one of the first to fourth aspects, wherein the fluoropolymer has a melt flow rate at 372°C of 10 g/10 min or more.
<6> According to the sixth aspect of the present disclosure, provided is
the powder according to any one of the first to fifth aspects, wherein the fluoropolymer has a melting point of 220°C or higher.
<7> According to the seventh aspect of the present disclosure, provided is
the powder according to any one of the first to sixth aspects, wherein the fluoropolymer has a functional groups, and the number of the functional groups is more than 50 per $10^6$ carbon atoms.
<8> According to the eighth aspect of the present disclosure, provided is
the powder according to any one of the first to seventh aspects, wherein the fluorine-containing compound having a hydrophilic group is a compound represented by the following general formula ($N^0$):

General formula ($N^0$): $X^{n0}-Rf^{n0}-Y^0$

wherein $X^{n0}$ is H, Cl, or F; $Rf^{n0}$ is a linear, branched, or cyclic alkylene group having 3 to 20 carbon atoms in which some or all of H are replaced by F, the alkylene group optionally containing one or more ether bonds in which some of H are optionally replaced by Cl; and $Y^0$ is an anionic group.
<9> According to the ninth aspect of the present disclosure, provided is
the powder according to any one of the first to eighth aspects, wherein the fluorine-containing compound having a hydrophilic group contains at least a compound (H2) represented by general formula (H2), and a content of the compound (H2) is 25 ppb by mass or less based on the powder:

General formula (H2): $[C_{n-1}F_{2n-1}COO^-]M^+$

wherein n is an integer of 4 to 14, and $M^+$ represents a cation.
<10> According to the tenth aspect of the present disclosure, provided is
the powder according to any one of the first to ninth aspects, wherein the fluorine-containing compound having a hydrophilic group contains at least perfluoroethercarboxylic acid.
<11> According to the eleventh aspect of the present disclosure, provided is
a powder coating material containing the powder according to any one of the first to tenth aspects.
<12> According to the twelfth aspect of the present disclosure, provided is
a method for producing a powder containing a particle of a fluoropolymer, the method comprising:

polymerizing a fluoromonomer in a reactor in the presence of a fluorine-containing surfactant, a polymerization initiator, and an aqueous medium to produce an aqueous dispersion containing a primary particle of at least one fluoropolymer selected from the group consisting of a tetrafluoroethylene/perfluoro(alkyl vinyl ether) copolymer, a

tetrafluoroethylene/hexafluoropropylene copolymer, and a tetrafluoroethylene/perfluoro(alkyl vinyl ether)/hexafluoropropylene copolymer;

after the aqueous dispersion is produced, carrying out at least one of the operations of removing from the reactor the fluoromonomer remaining in the reactor, and recovering the aqueous dispersion in the reactor and accommodating the aqueous dispersion in a container different from the reactor;

adding to the aqueous dispersion a radical generator in an amount of not less than 5 mol times per mole of the fluorine-containing surfactant used in the polymerization;

subjecting to a heat treatment the aqueous dispersion containing the radical generator;

coagulating the fluoropolymer in the aqueous dispersion subjected to the heat treatment to produce a wet powder containing the particle of the fluoropolymer; and

drying the wet powder at a temperature not higher than a temperature that is 50°C lower than a melting point of the fluoropolymer to produce the powder.

<13> According to the thirteenth aspect of the present disclosure, provided is
a liquid coating material composition containing the powder according to any one of the first to tenth aspects.
<14> According to the fourteenth aspect of the present disclosure, provided is

a powder containing a particle of a fluoropolymer, wherein

the powder contains a fluorine-containing compound having a hydrophilic group, and a content of the fluorine-containing compound having a hydrophilic group is 250 ppb by mass or less based on the powder;

the fluoropolymer is at least one selected from the group consisting of a tetrafluoroethylene/perfluoro(alkyl vinyl ether) copolymer, a tetrafluoroethylene/hexafluoropropylene copolymer, and a tetrafluoroethylene/perfluoro(alkyl vinyl ether)/hexafluoropropylene copolymer; and

the powder is obtained by densifying a base powder containing the fluoropolymer with a roll under conditions that provide a specific gravity not less than 90% of a true specific gravity, pulverizing the densified powder, then removing a fine particle in a 3 to 40% by mass range of an overall particle size distribution of the pulverized powder by pneumatic classification, and further removing coarse particle in a 1 to 20% by mass range of the overall particle size distribution of the pulverized powder by classification.

<15> According to the fifteenth aspect of the present disclosure, provided is
the powder according to the fourteenth aspect, wherein the fluorine-containing compound having a hydrophilic group is a compound represented by the following general formula ($N^0$):

General formula ($N^0$): $X^{n0}$-$Rf^{n0}$-$Y^0$

wherein $X^{n0}$ is H, Cl, or F; $Rf^{n0}$ is a linear, branched, or cyclic alkylene group having 3 to 20 carbon atoms in which some or all of H are replaced by F, the alkylene group optionally containing one or more ether bonds in which some of H are optionally replaced by Cl; and $Y^0$ is an anionic group.
<16> According to the sixteenth aspect of the present disclosure, provided is
the powder according to the fourteenth or fifteenth aspect, wherein the particles of the fluoropolymer have an average secondary particle size of less than 5 to 100 μm.
<17> According to the seventeenth aspect of the present disclosure, provided is
the powder according to any one of the fourteenth to sixteenth aspect, wherein the pulverization of the densified base powder is carried out at 20 to 100°C.
<18> According to the eighteenth aspect of the present disclosure, provided is
a method for producing a powder containing a particle of a fluoropolymer, the method comprising:

polymerizing a fluoromonomer in a reactor in the presence of a fluorine-containing surfactant, a polymerization initiator, and an aqueous medium to produce an aqueous dispersion containing a primary particle of at least one fluoropolymer selected from the group consisting of a tetrafluoroethylene/perfluoro(alkyl vinyl ether) copolymer, a tetrafluoroethylene/hexafluoropropylene copolymer, and a tetrafluoroethylene/perfluoro(alkyl vinyl ether)/hexafluoropropylene copolymer;

after the aqueous dispersion is produced, carrying out at least one of the operations of removing from the reactor the fluoromonomer remaining in the reactor, and recovering the aqueous dispersion in the reactor and accommodating the aqueous dispersion in a container different from the reactor;

adding to the aqueous dispersion a radical generator in an amount of not less than 5 mol times per mole of the fluorine-containing surfactant used in the polymerization;

subjecting to a heat treatment the aqueous dispersion containing the radical generator;

coagulating the fluoropolymer in the aqueous dispersion subjected to the heat treatment to produce a wet powder containing the particle of the fluoropolymer;
drying the wet powder to produce a base powder containing the fluoropolymer; and
densifying a base powder containing the fluoropolymer with a roll under conditions that provide a specific gravity not less than 90% of a true specific gravity, pulverizing the densified powder, then removing a fine particle in a 3 to 40% by mass range of an overall particle size distribution of the pulverized powder by pneumatic classification, and further removing a coarse particle in a 1 to 20% by mass range of the overall particle size distribution of the pulverized powder by classification.

EXAMPLES

Next, embodiments of the present disclosure will now be described by way of Examples, but the present disclosure is not limited only to the Examples.
The numerical values in the Examples were measured by the following methods.

<Solid concentration of aqueous dispersion>

One gram of an aqueous dispersion was dried in an air dryer at 150°C for 60 minutes, and a value expressed in percentage that is the proportion of the mass of the heating residue to the mass (1 g) of the aqueous dispersion was used as a solid concentration.

<Average primary particle size>

A PTFE aqueous dispersion having a solid concentration that was regulated to about 1.0% by mass was prepared, and the average primary particle size was measured 70 times cumulatively using ELSZ-1000S (manufactured by Otsuka Electronics Co., Ltd.) at 25°C. The refractive index of the solvent (water) was 1.3328, and the viscosity of the solvent (water) was 0.8878 mPa·s.

<Average secondary particle size>

The particle size distribution was measured using a laser diffraction particle size distribution analyzer (manufactured by JEOL Ltd.) at a pressure of 0.1 MPa for a measurement time of 3 seconds without using a cascade, and a value corresponding to 50% of the resulting cumulative particle size distribution was regarded as the average particle size.

<Content of PPVE unit>

The content of the perfluoro(propyl vinyl ether) (PPVE) unit in the copolymer was determined by $^{19}$F-NMR analysis.

<Melting point>

The melting point was measured with a differential scanning calorimeter (DSC). A 10 mg sample was weighed, heated from 140°C to 360°C at 10°C/min, retained at 360°C for 1 minute, then cooled to 140°C at 10°C/min, retained at 140°C for 1 minute, and again heated to 380°C at 10°C/min. The melting peak temperature (Tm) from the melting curve obtained during the second heating was regarded as a melting point.

<Melt flow rate (MFR)>

Using a melt indexer equipped with a corrosion-resistant cylinder, die, and piston (manufactured by Toyo Seiki Seisaku-sho, Ltd.) in accordance with ASTM D 1238-95, 5 g of a sample was placed and retained for 5 minutes in the cylinder retained at 372±1°C, then extruded through a die orifice under a load (the piston and a weight) of 5 kg, and the extrusion rate (g/10 min) of the melt at this time was determined as MFR.

<Specific surface area>

The specific surface area was measured by BET method with a surface analyzer (product name: MONOSORB, manufactured by QUANTACHROME INSTRUMENTS). A mixed gas of 30% nitrogen and 70% helium was used as a carrier gas, and liquid nitrogen was used for cooling.

<Number of functional groups>

Pellets of the copolymer were formed by cold press into a film having a thickness of 0.25 to 0.30 mm. The film was scanned 40 times and analyzed by a Fourier transform infrared spectrometer [FT-IR (Spectrum One, manufactured by PerkinElmer, Inc.)] to obtain an infrared absorption spectrum, and a difference spectrum against a base spectrum that is completely fluorinated and has no functional groups was obtained. From an absorption peak of a specific functional group observed on this difference spectrum, the number N of the functional groups per $1\times10^6$ carbon atoms in the sample was calculated according to the following expression (A):

$$N = I \times K/t \cdot (A)$$

I: Absorbance

K: Correction factor

t: Thickness of film (mm)

Regarding the functional groups in the present disclosure, for reference, the absorption frequencies, the molar absorption coefficients, and the correction factors are shown in Table 2. The molar absorption coefficients are those determined from FT-IR measurement data of low molecular model compounds.

[Table 2]

**Table 2**

| Functional Group | Absorption Frequency ($cm^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| $-COOCH_3$ | 1795 | 680 | 342 | $C_7F_{15}COOCH_3$ |
| $-CONH_2$ | 3436 | 506 | 460 | $C_7H_{15}CONH_2$ |
| $-CH_2OH_2$, -OH | 3648 | 104 | 2236 | $C_7H_{15}CH_2OH$ |
| $-CF_2H$ | 3020 | 8.8 | 26485 | $H(CF_2CF_2)_3CH_2OH$ |
| $-CF=CF_2$ | 1795 | 635 | 366 | $CF_2=CF_2$ |

<Measurement of fluorine-containing compound having hydrophilic group>

The content of the fluorine-containing compound having a hydrophilic group contained in the powder was determined in terms of the content of the fluorine-containing compound having a hydrophilic group extracted from the powder.

0. Extraction of fluorine-containing compounds having hydrophilic group from powder

First, 10 g (12.6 mL) of methanol was added to 1 g of the powder, and the mixture was subjected to ultrasonication at 60°C for 2 hours. After the mixture was left to stand at room temperature, solid matter was removed to give an extract.

<Measurement of perfluoroethercarboxylic acid A>

1. Calibration curve of perfluoroethercarboxylic acid A

Methanol standard solutions of perfluoroethercarboxylic acid A having five known concentration levels were

prepared, and measurement was made using a liquid chromatograph-mass spectrometer (Agilent, Ultivo Triple Quadrupole LC-MS). First-order approximation was used to create calibration curves from the concentrations of the methanol standard solutions and peak integral values thereof at respective concentration ranges.

Measuring instrument configuration and LC-MS measurement conditions

[Table 3]

Table 3 Measuring instrument confguration and LC-MS measurement conditions

| | | |
|---|---|---|
| LC unit | | |
| | Device | 1290 Infinity II manufactured by Agilent Technologies |
| | Column | Zorbax RRHD Extend-C18 1.8 μm (2.1 × 50 mm) manufactured by Agilent Technologies |
| | Mobile phase | A $CH_3CN$<br>B 20 mM $CH_3COONH_4/H_2O$<br>0 → 3 min A:B = 60:40 |
| | Flow rate | 0.3 ml/min |
| | Column temperature | 40°C |
| | Sample injection volume | 1 μL |
| MS unit | | |
| | Device | Ultivo LC/TQ manufactured by Agilent Technologies |
| | Measurement mode | MRM (Multiple Reaction Monitoring) |
| | Ionization method | Electrospray ionization<br>Negative mode |

MRM measurement parameters

[Table 4]

Table 4 MRM measurement parameters

| Compound | Precursor | Product |
|---|---|---|
| Perfluoroethercarboxylic acid A | 395 | 351 |

2. Content of perfluoroethercarboxylic acid A contained in powder

The content of perfluoroethercarboxylic acid A contained in the extract was measured with a liquid chromatograph-mass spectrometer from the calibration curve. The content of perfluoroethercarboxylic acid A contained in the powder was determined using the following relational expression (1):

$$Y_A = X_A \times 12.6 \quad (1)$$

$Y_A$: Content of perfluoroethercarboxylicacid A contained in powder (ppb by mass/powder)
$X_A$: Content of perfluorocarboxylic acid A contained in extract (ng/mL)

The lower quantification limit of the content of perfluoroethercarboxylic acid A contained in the powder is 1 ppb by mass/powder.

<Content of compound represented by general formula (H2)>

The content of the compound represented by general formula (H2) was determined from the calibration curve of a linear perfluorocarboxylic acid having the same number of carbon atoms.

1. Calibration curve of perfluorocarboxylic acid

Methanol standard solutions of perfluorobutanoic acid, perfluoropentanoic acid, perfluorohexanoic acid, perfluoroheptanoic acid, perfluorooctanoic acid, perfluorononanoic acid, perfluorodecanoic acid, perfluoroundecanoic acid, perfluorododecanoic acid, perfluorotridecanoic acid, and perfluorotetradecanoic acid having five known concentration levels were prepared, and measurement was made using a liquid chromatograph-mass spectrometer (Agilent, Ultivo Triple Quadrupole LC-MS). First-order approximation was used to create calibration curves from the concentrations of the methanol standard solutions and peak integral values thereof at respective concentration ranges.

Measuring instrument configuration and LC-MS measurement conditions

[Table 5]

Table 5 Measuring instrument configuration and LC-MS measurement conditions

| | | | | |
|---|---|---|---|---|
| LC unit | | | | |
| | Device | 1290 Infinity II manufactured by Agilent Technologies | | |
| | Column | Zorbax RRHD Extend-C18 1.8 μm (2.1 × 50 mm) manufactured by Agilent Technologies | | |
| | Mobile phase | A $CH_3CN$<br>B 20 mM $CH_3COONH_4/H_2O$ | | |
| | | | 0 → 1 min | A:B = 10:90 |
| | | | 1 → 6 min | A:B = 10:90 → A:B = 95:5 Linear gradient |
| | | | 6 → 12 min | A:B = 95:5 |
| | Flow rate | 0.3 ml/min | | |
| | Column temperature | 40°C | | |
| | Sample injection volume | 1 μL | | |
| MS unit | | | | |
| | Device | Ultivo LC/TQ manufactured by Agilent Technologies | | |
| | Measurement mode | MRM (Multiple Reaction Monitoring) | | |
| | Ionization method | Electrospray ionization<br>Negative mode | | |

MRM measurement parameters

[Table 6]

Table 6 MRM measurement parameters

| Compound | Number of carbon atoms | Precursor | Product |
|---|---|---|---|
| Perfluorobutanoic acid | 4 | 213 | 169 |
| Perfluoropentanoic acid | 5 | 263 | 219 |
| Perfluorohexanoic acid | 6 | 313 | 269 |

(continued)

Table 6 MRM measurement parameters

| Compound | Number of carbon atoms | Precursor | Product |
|---|---|---|---|
| Perfluoroheptanoic acid | 7 | 363 | 319 |
| Perfluorooctanoic acid | 8 | 413 | 369 |
| Perfluorononanoic acid | 9 | 463 | 419 |
| Perfluorodecanoic acid | 10 | 513 | 469 |
| Perfluoroundecanoic acid | 11 | 563 | 519 |
| Perfluorododocanoic acid | 12 | 613 | 569 |
| Perfluorotridecanoic acid | 13 | 663 | 619 |
| Perfluorotetradecanoic acid | 14 | 713 | 669 |

2. Content of compound represented by general formula (H2) contained in powder

The content of the compound represented by general formula (H2), having the number n of carbon atoms, and contained in the extract was measured from a calibration curve using a liquid chromatograph-mass spectrometer. The content of the compound represented by general formula (H2), having the number n of carbon atoms, and contained in the powder was determined using the following relational expression (2):

$$Yn = Xn \times 12.6 \quad (2)$$

Yn: Content (ppb by mass/powder) of compound represented by general formula (H2), having the number n of carbon atoms, and contained in powder
Xn: Content (ng/mL) of compound represented by general formula (H2), having the number n of carbon atoms, and

contained in extract
The lower quantification limit of the content of the compound represented by general formula (H2), having the number n of carbon atoms, and contained in the powder was 1 ppb by mass/powder.

MRM measurement parameters

[Table 7]

Table 7 MRM measurement parameters

| Compound | Number of carbon atoms | Precursor | Product |
|---|---|---|---|
| $[C_3F_7COO^-]M^+$ | 4 | 213 | 169 |
| $[C_4F_9COO^-]M^+$ | 5 | 263 | 219 |
| $[C_3F_{11}COO^-]M^+$ | 6 | 313 | 269 |
| $[C_6F_{13}COO^-]M^+$ | 7 | 363 | 319 |
| $[C_7F_{15}COO^-]M^+$ | 8 | 413 | 369 |
| $[C_8F_{17}COO^-]M^+$ | 9 | 463 | 419 |
| $[C_9F_{19}COO^-]M^+$ | 10 | 513 | 469 |
| $[C_{10}F_{21}COO^-]M^+$ | 11 | 563 | 519 |
| $[C_{11}F_{23}COO^-]M^+$ | 12 | 613 | 569 |
| $[C_{12}F_{25}COO^-]M^+$ | 13 | 663 | 619 |
| $[C_{13}F_{27}COO^-]M^+$ | 14 | 713 | 669 |

Synthesis Example 1

White solid A of perfluoroethercarboxylic acid A having a molecular weight of 1,000 or less was obtained by the

method described in Synthesis Example 1 of International Publication No. WO 2021/045228.

Production Example 1

First, 3,750 g of deionized water and 5.49 g of white solid A obtained in Synthesis Example 1 as a fluorine-containing surfactant were added to a stirrer-equipped SUS reactor having an internal volume of 6 L. Then, the contents of the reactor were suctioned while being heated to 60°C and, at the same time, the reactor was purged with TFE to remove oxygen in the reactor, and the contents were stirred. After 6.9 g of methylene chloride and 27 g of perfluoro(propyl vinyl ether) (PPVE) were added to the reactor, TFE was added until a pressure of 1.3 MPaG was reached. Then, 990 mg of an ammonium persulfate (APS) initiator dissolved in 20 g of deionized water was added to the reactor. After the initiator was added, the pressure dropped, and the initiation of polymerization was observed. TFE was added to the reactor to maintain a constant pressure of 1.3 MPaG. After the initiation of polymerization, 4 g of PPVE was continuously added per 100 g of TFE. When TFE consumed in the reaction reached about 1,080 g, the feeding of TFE was stopped, stirring was stopped, and thus the reaction was terminated. Thereafter, the pressure inside the reactor was released until reaching normal pressure, and thus an aqueous dispersion of a tetrafluoroethylene/perfluoro(propyl vinyl ether) copolymer (PFA) was obtained.

The solid content of the resulting PFA aqueous dispersion was 22.8% by mass, and the average primary particle size was 0.26 μm.

Comparative Example 1

Nitric acid was added to the PFA aqueous dispersion obtained in Production Example 1, and the mixture was coagulated by vigorous mechanical shearing force. Moreover, the resulting wet powder was filtered off and repeatedly washed with fresh deionized water. The resulting wet powder was dried in a hot air circulation dryer at 180°C for 6 hours to give a PFA powder.

The resulting PFA powder had a PPVE content of 3.9% by mass, a MFR of 40 g/10 min, a melting point of 310°C, an average secondary particle size of 1.5 μm, and a specific surface area of 16.0 $m^2$/g.

Example 1

The PFA aqueous dispersion obtained in Production Example 1 was placed in a different reactor, the contents of the reactor were heated to 80°C, and 30.3 g of ammonium persulfate (an amount of 10 mol times per mole of the fluorine-containing surfactant used in the polymerization) was added as a radical generator. Thereafter, the mixture was retained at 80°C for 3 hours to give a heat-treated PFA aqueous dispersion. Nitric acid was added to the resulting heat-treated PFA aqueous dispersion, and the mixture was stirred and coagulated to give a wet powder, which was then dried at 180°C for 6 hours. The resulting PFA powder had a PPVE content of 3.9% by mass, a MFR of 40 g/10 min, a melting point of 310°C, an average secondary particle size of 1.6 μm, a specific surface area of 15.6 $m^2$/g, and 286 functional groups per $10^6$ carbon atoms in the main chain.

The content of perfluoroethercarboxylic acid contained in the resulting powder is shown in Table 8.

[Table 8]

**Table 8**

| | Comparative Example 1 | Example 1 |
|---|---|---|
| Perfluoroethercarboxylic acid A | 504 | 21 |
| Unit: ppb by mass/powder | | |

The content of the compound represented by general formula (H2): $[C_{n-1}F_{2n-1}COO^-]M^+$ contained in the resulting powder is shown in Table 9.

[Table 9]

**Table 9**

| n | Comparative Example 1 | Example 1 |
|---|---|---|
| 4 | <1 | <1 |
| 5 | 6 | <1 |
| 6 | <1 | <1 |
| 7 | <1 | <1 |
| 8 | <1 | <1 |
| 9 | <1 | <1 |
| 10 | <1 | <1 |
| 11 | 1 | <1 |
| 12 | <1 | <1 |
| 13 | 6 | <1 |
| 14 | <1 | <1 |
| Unit: ppb by mass/powder | | |

Next, embodiments of liquid coating material compositions containing the PFA powders obtained in the above Example and Comparative Example will now be described by way of Examples.
The numerical values in the Examples were measured by the following methods.

<Contact angle>

The contact angle with respect to water and n-cetane was measured using a contact angle tester CA-DT manufactured by Kyowa Interface Science Co., Ltd.

<Frictional coefficient>

Using a surface quality tester HEIDON Type 38 manufactured by Shinto Scientific Co., Ltd., the static frictional coefficient and the kinetic frictional coefficient when a ball indenter was pressed under a load of 1 kg and moved at a speed of 600 mm/min were measured. The results are shown in Table 10.

Comparative Example 2

First, 10 g of the PFA powder obtained in Comparative Example 1 and 10 g of polyethersulfonic acid resin (PES 5003P manufactured by Sumitomo Chemical Company, Limited) were added to a mixed solvent of 50 g of 3-methoxy-N,N-dimethylpropanamide, 15 g of methyl isobutyl ketone, and 15 g of xylene, and dissolved and dispersed with a ball mill to give a PFA powder dispersion composition. Next, this dispersion composition was applied with a bar coater to a 0.5 mm thick stainless-steel plate having a dry-in-place chromate coating such that the dry film thickness was 10 μm, and then fired at 400°C for 90 seconds to give a coating film. The contact angle and the frictional coefficient of this coating film were measured.

Example 2

A coating film was obtained in the same manner as Comparative Example 3 except that the PFA powder obtained in Example 1 was used in place of the PFA powder obtained in Comparative Example 1. The contact angle and the frictional coefficient of this coating film were measured. The results are shown in Table 10.

[Table 10]

**Table 10**

| | Unit | Comparative Example 2 | Example 2 |
|---|---|---|---|
| Contact angle (with respect to water) | Degree | 95 | 103 |
| Contact angle (with respect to n-cetane) | Degree | 33 | 39 |
| Static frictional coefficient | - | 0.19 | 0.13 |
| Kinetic frictional coefficient | - | 0.10 | 0.06 |

Production Example 2

In accordance with the production method described in Example 1 of Japanese Patent Laid-Open No. 2010-235667, the reaction scale, the reaction pressure, the amount of TFE charged, the amount of HFP charged, the amount of PPVE charged, the amount of ammonium persulfate charged, and the like were suitably regulated to give an aqueous dispersion of a TFE/HFP/PPVE copolymer (FEP). The solid concentration of the resulting FEP aqueous dispersion was 20.1% by mass.

The resulting polymer had a MFR of 35.7 g/10 min, a composition ratio (% by mass) of TFE/HFP/PPVE=87.6/11.5/0.9, and a melting point of 257°C.

Production Example 3

The FEP aqueous dispersion obtained in Production Example 2 was placed in a different reactor, the contents of the reactor were heated to 80°C, and ammonium persulfate in an amount of 10 mol times per mole of the fluorine-containing surfactant used in the polymerization was added as a radical generator. Thereafter, the mixture was retained at 80°C for 3 hours to give a heat-treated FEP aqueous dispersion. Nitric acid was added to the resulting heat-treated FEP aqueous dispersion, and the mixture was stirred and coagulated to give a wet powder, which was then dried at 180°C for 6 hours. The resulting FEP powder had a MFR of 35.5 g/10 min, a composition ratio (% by mass) of TFE/HFP/PPVE=87.6/11.5/0.9, and a melting point of 256°C.

Example 3

In accordance with the production method described in Example 1 of International Publication No. WO 97/040089, a pulverized powder was obtained except that the powder obtained in Production Example 3 was used in place of the powder compressed to a sheet form. The specific gravity of the resulting sheet measured with a gravimeter was 2.04, and it was thus confirmed that the sheet was highly densified to a specific gravity that was 95% of the true specific gravity. The fine-particle removal rate was 16% by mass, and the coarse-particle removal rate was 4% by mass.

The resulting pulverized powder had an average secondary particle size of 60 μm and an apparent density of 0.88 g/mL. The apparent density was measured in accordance with JIS K 6891-5.3.

The content of the compound represented by general formula (H2): $[C_{n-1}F_{2n-1}COO^{-}]M^{+}$ contained in the resulting powder is shown in Table 11.

[Table 11]

**Table 11**

| n | Example 3 |
|---|---|
| 4 | <1 |
| 5 | <1 |
| 6 | <1 |
| 7 | <1 |
| 8 | <1 |
| 9 | <1 |
| 10 | <1 |

(continued)

| n | Example 3 |
|---|---|
| 11 | <1 |
| 12 | <1 |
| 13 | <1 |
| 14 | <1 |
| Unit: ppb by mass/powder | |

**Claims**

1. A powder containing a particle of a fluoropolymer, wherein

   the powder contains a fluorine-containing compound having a hydrophilic group, and a content of the fluorine-containing compound having a hydrophilic group is 250 ppb by mass or less based on the powder;
   the particles of the fluoropolymer have an average secondary particle size of 0.5 to 10 μm; and
   the fluoropolymer is at least one selected from the group consisting of a tetrafluoroethylene/perfluoro(alkyl vinyl ether) copolymer, a tetrafluoroethylene/hexafluoropropylene copolymer, and a tetrafluoroethylene/perfluoro(alkyl vinyl ether)/hexafluoropropylene copolymer.

2. The powder according to claim 1, having a specific surface area of 8 $m^2/g$ or more.

3. The powder according to claim 1 or 2, wherein the particles of the fluoropolymer have an average primary particle size of less than 0.5 μm.

4. The powder according to any one of claims 1 to 3, wherein the perfluoro(alkyl vinyl ether) is perfluoro(propyl vinyl ether).

5. The powder according to any one of claims 1 to 4, wherein the fluoropolymer has a melt flow rate at 372°C of 10 g/10 min or more.

6. The powder according to any one of claims 1 to 5, wherein the fluoropolymer has a melting point of 220°C or higher.

7. The powder according to any one of claims 1 to 6, wherein the fluoropolymer has a functional groups, and the number of the functional groups is more than 50 per $10^6$ carbon atoms.

8. The powder according to any one of claims 1 to 7, wherein the fluorine-containing compound having a hydrophilic group is a compound represented by the following general formula ($N^0$):

   General formula ($N^0$): $X^{n0}\text{-}Rf^{n0}\text{-}Y^0$

   wherein $X^{n0}$ is H, Cl, or F; $Rf^{n0}$ is a linear, branched, or cyclic alkylene group having 3 to 20 carbon atoms in which some or all of H are replaced by F, the alkylene group optionally containing one or more ether bonds in which some of H are optionally replaced by Cl; and $Y^0$ is an anionic group.

9. The powder according to any one of claims 1 to 8, wherein the fluorine-containing compound having a hydrophilic group contains at least a compound (H2) represented by general formula (H2), and a content of the compound (H2) is 25 ppb by mass or less based on the powder:

   General formula (H2): $[C_{n-1}F_{2n-1}COO^-]M^+$

   wherein n is an integer of 4 to 14, and $M^+$ represents a cation.

10. The powder according to any one of claims 1 to 9, wherein the fluorine-containing compound having a hydrophilic group contains at least perfluoroethercarboxylic acid.

**11.** A powder coating material containing the powder according to any one of claims 1 to 10.

**12.** A method for producing a powder containing a particle of a fluoropolymer, the method comprising:

polymerizing a fluoromonomer in a reactor in the presence of a fluorine-containing surfactant, a polymerization initiator, and an aqueous medium to produce an aqueous dispersion containing a primary particle of at least one fluoropolymer selected from the group consisting of a tetrafluoroethylene/perfluoro(alkyl vinyl ether) copolymer, a tetrafluoroethylene/hexafluoropropylene copolymer, and a tetrafluoroethylene/perfluoro(alkyl vinyl ether)/hexafluoropropylene copolymer;
after the aqueous dispersion is produced, carrying out at least one of the operations of removing from the reactor the fluoromonomer remaining in the reactor, and recovering the aqueous dispersion in the reactor and accommodating the aqueous dispersion in a container different from the reactor;
adding to the aqueous dispersion a radical generator in an amount of not less than 5 mol times per mole of the fluorine-containing surfactant used in the polymerization;
subjecting to a heat treatment the aqueous dispersion containing the radical generator;
coagulating the fluoropolymer in the aqueous dispersion subjected to the heat treatment to produce a wet powder containing the particle of the fluoropolymer; and
drying the wet powder at a temperature not higher than a temperature that is 50°C lower than a melting point of the fluoropolymer to produce the powder.

**13.** A liquid coating material composition containing the powder according to any one of claims 1 to 10.

**14.** A powder containing a particle of a fluoropolymer, wherein

the powder contains a fluorine-containing compound having a hydrophilic group, and a content of the fluorine-containing compound having a hydrophilic group is 250 ppb by mass or less based on the powder;
the fluoropolymer is at least one selected from the group consisting of a tetrafluoroethylene/perfluoro(alkyl vinyl ether) copolymer, a tetrafluoroethylene/hexafluoropropylene copolymer, and a tetrafluoroethylene/perfluoro(alkyl vinyl ether)/hexafluoropropylene copolymer; and
the powder is obtained by densifying a base powder containing the fluoropolymer with a roll under conditions that provide a specific gravity not less than 90% of a true specific gravity, pulverizing the densified powder, then removing a fine particle in a 3 to 40% by mass range of an overall particle size distribution of the pulverized powder by pneumatic classification, and further removing a coarse particle in a 1 to 20% by mass range of the overall particle size distribution of the pulverized powder by classification.

**15.** The powder according to claim 14, wherein the fluorine-containing compound having a hydrophilic group is a compound represented by the following general formula ($N^0$):

General formula ($N^0$): $X^{n0}$-$Rf^{n0}$-$Y^0$

wherein $X^{n0}$ is H, Cl, or F; $Rf^{n0}$ is a linear, branched, or cyclic alkylene group having 3 to 20 carbon atoms in which some or all of H are replaced by F, the alkylene group optionally containing one or more ether bonds in which some of H are optionally replaced by Cl; and $Y^0$ is an anionic group.

**16.** The powder according to claim 14 or 15, wherein the particles of the fluoropolymer have an average secondary particle size of less than 5 to 100 μm.

**17.** The powder according to any one of claims 14 to 16, wherein the pulverization of the densified base powder is carried out at 20 to 100°C.

**18.** A method for producing a powder containing a particle of a fluoropolymer, the method comprising:

polymerizing a fluoromonomer in a reactor in the presence of a fluorine-containing surfactant, a polymerization initiator, and an aqueous medium to produce an aqueous dispersion containing a primary particle of at least one fluoropolymer selected from the group consisting of a tetrafluoroethylene/perfluoro(alkyl vinyl ether) copolymer, a tetrafluoroethylene/hexafluoropropylene copolymer, and a tetrafluoroethylene/perfluoro(alkyl vinyl ether)/hexafluoropropylene copolymer;
after the aqueous dispersion is produced, carrying out at least one of the operations of removing from the reactor

the fluoromonomer remaining in the reactor, and recovering the aqueous dispersion in the reactor and accommodating the aqueous dispersion in a container different from the reactor;
adding to the aqueous dispersion a radical generator in an amount of not less than 5 mol times per mole of the fluorine-containing surfactant used in the polymerization;
subjecting to a heat treatment the aqueous dispersion containing the radical generator;
coagulating the fluoropolymer in the aqueous dispersion subjected to the heat treatment to produce a wet powder containing the particle of the fluoropolymer;
drying the wet powder to produce a base powder containing the fluoropolymer; and
densifying a base powder containing the fluoropolymer with a roll under conditions that provide a specific gravity not less than 90% of a true specific gravity, pulverizing the densified powder, then removing a fine particle in a 3 to 40% by mass range of an overall particle size distribution of the pulverized powder by pneumatic classification, and further removing a coarse particle in a 1 to 20% by mass range of the overall particle size distribution of the pulverized powder by classification.

## INTERNATIONAL SEARCH REPORT

International application No.
**PCT/JP2023/027655**

### A. CLASSIFICATION OF SUBJECT MATTER

***C08F 214/26***(2006.01)i; ***C08F 6/14***(2006.01)i; ***C09D 5/03***(2006.01)i; ***C09D 127/18***(2006.01)i
FI: C08F214/26; C08F6/14; C09D5/03; C09D127/18

According to International Patent Classification (IPC) or to both national classification and IPC

### B. FIELDS SEARCHED

Minimum documentation searched (classification system followed by classification symbols)

C08F214/26; C08F6/14; C09D5/03; C09D127/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2009/020187 A1 (DAIKIN INDUSTRIES, LTD.) 12 February 2009 (2009-02-12) claims 2-6, 9-10, 13, paragraphs [0006], [0007], [0028], [0029], [0037], [0047], [0109]-[0118], [0126]-[0152], examples 1-7 | 1-6, 8-11, 13 |
| Y | | 14-17 |
| A | | 7, 12, 18 |
| X | JP 2018-024869 A (DAIKIN INDUSTRIES, LTD.) 15 February 2018 (2018-02-15) claims 8-9, paragraphs [0021], [0061], [0065], [0067], [0083]-[0085], [0100], [0114]-[0130], examples 1-3 | 1-6, 8-11, 13 |
| Y | | 14-17 |
| A | | 7, 12, 18 |
| X | JP 2020-019972 A (DAIKIN INDUSTRIES, LTD.) 06 February 2020 (2020-02-06) claims 1-3, paragraphs [0008], [0009], [0053], [0057], [0059], [0075]-[0077] | 1-11, 13 |
| Y | | 14-17 |
| A | | 12, 18 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 October 2023** | **17 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

## INTERNATIONAL SEARCH REPORT

International application No.
**PCT/JP2023/027655**

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2021-523960 A (3M INNOVATIVE PROPERTIES CO.) 09 September 2021 (2021-09-09)<br>claims 1, 4-5, 8-9, 14, 19, paragraphs [0035], [0060], [0064], [0099]-[0106], examples 3 | 1, 3-5, 8-10<br>14-17<br>2, 6-7, 11-13, 18 |
| Y | WO 1997/040089 A1 (DAIKIN INDUSTRIES, LTD.) 30 October 1997 (1997-10-30)<br>claims 1-4 | 14-17 |
| A | WO 2021/130150 A1 (SOLVAY SPECIALTY POLYMERS ITALY S.P.A.) 01 July 2021 (2021-07-01)<br>claims 1, 16 | 1-18 |

Form PCT/ISA/210 (second sheet) (January 2015)

**INTERNATIONAL SEARCH REPORT**
**Information on patent family members**

International application No.
**PCT/JP2023/027655**

| Patent document cited in search report | Publication date (day/month/year) | Patent family member(s) | Publication date (day/month/year) |
|---|---|---|---|
| WO 2009/020187 A1 | 12 February 2009 | US 2010/0204345 A1<br>claims 2-6, 9-10, 13, paragraphs [0005], [0006], [0035], [0036], [0044], [0054], [0115]-[0124], [0132]-[0158], examples 1-7<br>CN 101772520 A | |
| JP 2018-024869 A | 15 February 2018 | US 2019/0023818 A1<br>claims 8-9, paragraphs [0026]-[0028], [0072], [0077], [0083], [0100]-[0102], [0113], [0127]-[0164], examples 1-3<br>US 2020/0123283 A1<br>EP 3388472 A1<br>EP 3770215 A1<br>CN 108473688 A | |
| JP 2020-019972 A | 06 February 2020 | US 2019/0023856 A1<br>claims 8-11, paragraphs [0011], [0012], [0058], [0062], [0069], [0085]-[0087]<br>US 2021/0040274 A1<br>EP 3385309 A1<br>EP 3643745 A2<br>CN 108473689 A<br>CN 113429714 A<br>CN 113563613 A<br>CN 114106368 A | |
| JP 2021-523960 A | 09 September 2021 | US 2021/0230328 A1<br>claims 1, 4-5, 8-9, 14, paragraphs [0037], [0063], [0067], [0100]-[0107], example 3<br>CN 112105656 A | |
| WO 1997/040089 A1 | 30 October 1997 | US 6376647 B1<br>claims 1-4<br>EP 896017 A1 | |
| WO 2021/130150 A1 | 01 July 2021 | US 2023/0032788 A1<br>claims 1, 16<br>CN 114787204 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 200796347 A
- WO 2002503744 A
- JP 2013100532 A
- US 20070015864
- US 20070015865
- US 20070015866
- US 20070276103
- US 20070117914
- US 2007142541
- US 20080015319
- US 3250808 A
- US 3271341 A
- JP 2003119204 A
- WO 2005042593 A
- WO 2008060461 A
- WO 2007046377 A
- JP 2007119526 A
- WO 2007046482 A
- WO 2007046345 A
- US 20140228531
- WO 2013189824 A
- WO 2013189826 A
- WO 2019161153 A
- WO 2021045228 A
- JP 2010235667 A
- WO 97040089 A